# EUROPEAN PATENT SPECIFICATION

(11) **EP 3 429 042 B1**
(45) Date of publication and mention of the grant of the patent: **03.08.2022**
(21) Application number: 17181399.1
(22) Date of filing: 14.07.2017
(51) Int. Cl.: H02G 15/18, B29C 65/00, B29C 65/34, B29C 65/36, B29C 61/06

(54) **HEAT SHRINK COMPONENT, AND METHOD OF ASSEMBLING A HEAT SHRINK COMPONENT**
WÄRMESCHRUMPFBARE KOMPONENTE UND VERFAHREN ZUR MONTAGE EINER WÄRMESCHRUMPFBAREN KOMPONENTE
COMPOSANT THERMORÉTRÉCISSABLE, ET PROCÉDÉ D'ASSEMBLAGE D'UN COMPOSANT THERMORÉTRÉCISSABLE

(43) Date of publication of application: 16.01.2019
(73) Proprietor: Tyco Electronics Raychem GmbH, 85521 Ottobrunn (DE)
(72) Inventor: SIMONSOHN, Thilo, 81735 München (DE); HEINDL, Christian, 80807 München (DE)
(74) Representative: Grünecker Patent- und Rechtsanwälte PartG mbB

(56) References cited:
- EP-A1- 0 008 912
- EP-A1- 0 024 179
- EP-A1- 2 987 624
- EP-B1- 1 190 839
- WO-A1-2013/067631
- US-A- 4 421 582

## Description

The present invention relates to a heat shrink component, and to a method of assembling a heat shrink component.

Heat shrink components in the sense of the present invention relate to articles that are made from material which shrinks from an expanded state into a shrunk state with much smaller dimensions by applying a sufficient amount of heat. Heat shrink components (also called heat shrink products in the following) are widely spread as joint sleeves or other cable accessories. The present invention utilizes a heat-recoverable article (an independently dimensionally heat-unstable article) as a heat shrink layer. In general, such an article is made of a material capable of having the property of elastic or plastic memory imparted thereto which is heated to a certain temperature and distorted under pressure to a configuration different from its normal configuration and then cooled while kept under pressure. If the article is made of a material which is wholly or partly crystalline, is at least partly cross-linked in the amorphous areas, and is distorted at a temperature at or above the crystalline melting point of the material, the article will have elastic memory. An article with elastic memory will not recover towards its original configuration until it is again heated at least to its crystalline melting temperature. If the article is made of a non-crystalline material, it is heated to a temperature at which the article can be distorted by pressure, and the distorted article then has the property of plastic memory. Examples of heat-recoverable materials are found in U.S. Pat. No. 2,027,962 and U.S. Pat. No. 3,086,242. Of course the heat shrink layer can be fabricated from any suitable material, as this is known to a person skilled in the art. Moreover, also multilayer arrangements that additionally comprise elastic and/or electrically semi-conductive and conductive layers are encompassed by the present invention.

In order to install heat shrink products for LV, MV, and HV applications, typically open flames, such as gas torches, are used. More rarely, also hot air guns with several kilo watt of power are employed. Hot air guns, however, are limited to thin walled products, like LV sleeves and molded parts with a low wall thickness in the range of 1 to 4 mm. For instance for electronic applications, where sleeves typically have wall thicknesses below 1 mm in the expanded state, hot air guns or tunnel heaters with ceramic radiation features are commonly used.

However, from the standpoint of safety at work, the use of open flames is disadvantageous. Furthermore, it is desired to reduce the amount of energy needed for installing products. In some cases it is also desired to reduce the amount of heat generated during installation. Consequently, it is desirable to use other energy sources than open flames, preferably electrical energy.

WO 2013/067631 relates to an apparatus for heating an elongate tubular article, such as a heat shrinkable sleeve applied around a welded pipe joint during pipeline construction. The apparatus is in the form of a frame which can be disposed around the article, the frame having a heater device having both longitudinally disposed heating zones and radially disposed heating sectors, each of which can be independently controlled. Alternatively, or in combination, the apparatus can have an air circulation system. Also, a method for shrinking a heat shrinkable sleeve comprising use of said apparatus.

US 4421582 A relates to articles which are heat-recoverable, or which can be rendered heat-recoverable or which have been heat-recovered, comprise a member composed of a conductive polymer and, attached to said member, at least two electrodes, at least one of which is an electrode comprising a plurality of pliable conductive elements, e.g., a braided tube. By connecting the electrodes to a source of electrical power, current is caused to pass through and heat the conductive polymer member. The heat generated can be used to provide all or part of the heat necessary to cause recovery of the heat-recoverable article. The conductive polymer preferably exhibits PTC behavior, thereby regulating the maximum temperature to which the article can be heated.

EP 1190839 B1 relates to tubular welding parts with a resistance winding arranged on their inner surface, the resistance winding being made up of at least three successively arranged welding zones, characterized in that arranged between two outer welding zones with an even winding density is a third welding zone with an uneven winding density, and in that each welding zone respectively has at least two taps for supplying power.

EP 0008912 A1 relates to a heat shrinkable synthetic resin cover adapted to cover a joint between two pipes or an electric cable, the cover comprises a heat shrinkable synthetic resin member in which is embedded a flexible electric heating element made of a conductor coated with a crosslinked polymer having heat shrinkability in substantially one direction such that the electric heating member does not preclude heat shrinkage of the heat shrinkable synthetic resin member in said direction. In use the cover can be heated uniformly from within, thereby promoting substantially uniform shrinkage thereof.

EP 0 024 179 A1 discloses an electrical heating element and a process for preparation thereof. An electrical heating element material of a sheet form is provided, which is comprised of a web of a synthetic resin having a plurality of metal conductor wires arranged therein in parallel to one another along the longitudinal direction of the web. The web is folded in succession at predetermined intervals along folding lines inclined at an acute angle to the transverse direction of the web to form a two-layer rectangular sheet. The electrical heating element material is prepared by supplying a plurality of metal conductor wires arranged in parallel to one another into a cross-head type extrusion die, separately supplying a thermoplastic resin into said die, co-extruding the resin together with the wires to form a web, folding the web in succession at predetermined intervals along folding lines inclined at an acute angle to the transverse direction of the web to form a two-layer rectangular sheet, and then, optionally, bonding together the two layers. The electrical heating element material may be used as a heat-shrinkable cover, which is comprised of a heat-shrinkable synthetic resin member and the electrical heating element material combined with the heat-shrinkable resin member substantially over the entire region thereof.

EP 2 987 624 A1 relates to a heating blanket for providing a shrinkable sleeve on a pipe assembly, comprising a heating sheet, e. g. provided with a pattern of resistance wiring connectable to an electric power supply, an insulation sheet interposed between the heating sheet and a pressure member, the pressure member being arranged for conformal engagement of the heating blanket around the pipe assembly during operation.

It is known to shrink heat shrinking products by adding at least one layer to the product that transforms electrical energy into heat. From DE 1941327 A1, an electrically conductive heat-recoverable article is known which is caused to recover by passing an electrical current through the article to raise it to its recovery temperature. The conductive article, e.g. a tubular sleeve, is placed in good heat-transfer relationship to an electrically non-conductive heat recoverable member, e.g. a tubular sleeve, so as to act as heater for this non-conductive member, the two members recovering substantially simultaneously. The conductive material of the sleeve is carbon-black filled cross-linked polyethylene which is made heat-recoverable. Other cross-linked polymers, non-crystalline polymers such as polyurethane and ionomers, as well as elastomers such as silicone rubber are disclosed. A conductive sleeve is surrounded by two insulating sleeves, or a slit conductive sleeve surrounds a heat-recoverable non-conductive sleeve and is peeled away after the non-conductive sleeve is fully recovered. Electrical connections to the conductive sleeves are established via alligator clips or other conventional clamps or electrodes.

However, these known arrangements suffer from the disadvantage that the time for performing the installation is usually above 15 minutes even for thin walled sleeves and therefore too long to be cost effective.

Furthermore, it is known to provide heating systems with fluid pipes in order to prevent fluid conducted by the pipes from freezing. These defrosting systems, however, allow only maximum temperatures of about 60 to 80°C and are therefore not applicable for shrinking heat shrink products which require temperatures above 120°C.

Outside the field of energy technology, it is known to use electrical heating for jointing pipes by means of thermoplastic coupling parts. As for instance disclosed in European patents EP 1190839 B1 and EP 0798099 B1, a molded part with embedded wires is positioned over the end portions of the two pipes to be joined. An electronic drive system linked to a power source then generates sufficient heat to melt the ends of the pipes which then are welded with each other and/or the molded part. For this field of application, the pipes essentially do not change their original diameter and each joint component is only used for one particular diameter of pipes. When applying such a system to a heat shrink component which usually undergoes a diameter reduction of around 10 % to 75 % of the expanded diameter during the heat shrink process, the molded part would lose mechanical contact to the heat shrink product.

Finally, there exist multiple heating systems in the art which are based on resistance wires. These wires are made from special metal alloys that have resistance values which are about 10 to 100 times higher than those of copper or aluminum. The disadvantage of using resistance heating wires can be seen in the fact that these standard resistance heating wires have a high specific resistance and therefore provide a high density of dissipated heat energy, so that for reaching a temperature of 120°C and higher by applying a voltage of about 24 V, only a short length of wire is needed. This rather short wire length causes severe problems to properly distribute the heat over the entire surface and volume of a typical heat shrink product such as an MV joint body. In addition, the costs of heating wires are much higher than of for instance copper wire.

Moreover, it was found that when using wires for heating up the heat shrink material within the allowed time (e. g. 10 min for a thicker walled MV joint body), they may have temperatures of 150°C or higher, sometimes even to 450°C. In these cases, the direct contact of the hot wires may cause the heat shrink material to fail due to material degradation. For instance, splitting of a heat shrink sleeve or the destruction of thin superficial conductive layers on the heat shrink sleeve may occur, resulting in electrical failure once the cable accessory is energized. Thus, it has to be ensured that heating wires can be operated to generate high temperatures, at the same time avoiding harming the heat shrink component.

Apart from avoiding temperature peaks and local overheating at the electrically conductive leads, a fast and even energy input towards the heat shrink material is of utmost significance for achieving the short shrinking durations that are required to be market competitive. In particular, a fast and even shrinkage of an essentially tubular heat shrink component around its entire circumference has to be ensured. Heat shrink cable accessories change their diameter by large degrees in the course of their installation process in order to conform to various cable diameters. These range taking properties strongly influence the heating system. An even shrinkage is important for cable accessories in order to close axial interfaces of joints and terminations. If the heat shrink product is a sleeve that has the purpose of sealing against the environment, an even shrinking is needed for instance to melt a hot melt arranged on the inside of the sleeve and to soften the sleeve itself in order to allow for a proper sealing.

However, it was found that a uniform heating along an axial direction is not always an optimal heating scheme because it is often desired that the shrinking process starts in one particular zone and proceeds into one or more axial directions towards peripheral ends of the heat shrink product until the complete heat shrink product has reached the final shrunk state. By such a gradual progression of the shrinking process along an axial direction, undesired gas inclusions between the heat shrink component and the object to be covered can be avoided. When using open flames, a human operator performing the heat shrinking process achieves such a progressive shrinking by adequately moving a torch along the heat shrink component.

The object underlying the present invention is to provide a heat shrink component, and a method of assembling a heat shrink component with an improved performance and reliability, thereby overcoming, or at least substantially reducing the above mentioned problems and drawbacks.

This object is solved by the subject matter of the independent claims. Advantageous embodiments of the present invention are the subject matter of the dependent claims.

The present invention is based on the idea that by providing a heating system that has at least one first heating zone and at least one second heating zone, wherein said heating system is operable to provide differing heating energy in the first and second heating zones during at least one period of time of the heat shrink process, the shrinking process will be faster at a zone with a higher heating energy and slower at the zone with the lower heating energy. Thereby, the shrinking process can be controlled to proceed from one section of a heat shrink product to another section. For instance, in case of a tubular heat shrink component, the shrinking process may start in a zone located in the centre of the product and proceed towards the ends of the product on both sides. This gradually moving shrinkage from one section to another section is important for instance to avoid entrapment of air which may lead to electrical discharges in case there is an electrical interface along the path from the center portion to the ends of the sleeve. Furthermore, the heating scheme according to the present invention may support the forming of a proper environmental sealing if the heat shrink component is intended to function as an environmental seal.

In particular, the present invention proposes a heat shrink component during a heat shrink process, with a heating system comprising at least one heating unit to be arranged in thermal contact to at least a part of said heat shrink component, said heating unit being operable to heat up the heat shrink component to its heat shrink temperature. The heat shrink temperature is defined as the temperature to which the heat shrink layer has to be heated in order to recover towards its original configuration. The heating system has at least one first heating zone and at least one second heating zone, and wherein said heating system is operable to provide differing heating energy in the first and second heating zones during at least one period of time of the heat shrink process.

There are several ways according to the present invention to achieve a differing energy transfer into the first and second heating zones. According to the invention, the heating system comprises at least one first heating unit being arranged in the at least one first heating zone, and at least one second heating unit in the at least one second heating zone, wherein the first and second heating units are controllable to be heated differently. In particular, the first heating unit(s) may be energized before the second heating unit(s) is (are) energized, so that the heat shrink process starts in the first zone(s) and then proceeds to take also place in the second zone(s) when the second heating unit(s) is (are) energized. It is clear for a person skilled in the art that any number of heating units can be provided, energizing the heating units sequentially to achieve a corresponding advancement of the heat shrink process.

It is also possible to vary the amount of energy (electrical current) running through the heating units over time. For instance, the second heating units may be energized at a lower level in the beginning for creating a pre-heating, while the first heating units are fully energized. This heating scheme may reduce the overall shrinking time.

According to a second advantageous embodiment of the present invention, tho the first and second heating units are arranged to be overlapping in an overlapping region, so as to form said first heating zone in the overlapping region and to form said at least one second heating zone in a non-overlapping region. It is clear for a person skilled in the art that the limits of the heating zones cannot be defined precisely because a transition zone of typically several millimeters will be present. Due to the enhanced density of heating energy in the overlapping region, the temperature reaches higher values earlier than in the non-overlapping areas. Consequently, the heat shrink process starts in the overlapping zone and proceeds to the non-overlapping zone(s).

Alternatively or additionally, said at least one heating unit comprises at least one electrically conductive lead for being heated by an electrical current flowing through the lead and said electrically conductive lead is arranged to cover a larger area of the surface to be heated in the first heating zone compared to the area it covers in said at least one second heating zone. Such a higher coverage of area can for instance be achieved by forming zones with a meandering layout of the electrically conductive lead compared to zones with a straight layout of the electrically conductive lead.

Furthermore, according to another advantageous embodiment, said at least one heating unit comprises at least one electrically conductive lead for being heated by an electrical current flowing through the lead, wherein said electrically conductive lead has a different cross-section in the first heating zone compared to the cross-section it has in the second heating zone and/or wherein said electrically conductive lead has a different specific conductivity in the first heating zone compared to the specific conductivity it has in the second heating zone.

By changing the cross-section and/or the specific conductivity and/or the length and/or by providing parallel and serial branches along the electrically conductive lead, the first and second heating zones have a different overall resistance and thereby dissipate different amounts of energy when a particular electrical current is applied to the electrically conductive lead. For instance, when providing the electrically conductive lead in the first heating zone with a smaller diameter and/or using a material having a higher specific resistance, this first heating zone will reach a higher temperature earlier than the second heating zone(s). The heat shrink process starts therefore at the first heating zone and proceeds to the second heating zone(s).

Moreover, the amount of energy which is dissipated into the heat shrink component in the first and second heating zones can also be controlled by adding one or more thermal insulation layers arranged in the first heating zone and/or in the second heating zone. Advantageously, thermal insulation layers arranged between the heat shrink component and the heating unit reduce the amount of heat provided to the heat shrink component at that given point in time compared to a region where the thermal insulation layer is thinner or not present at all. On the other hand, by arranging the at least one thermal insulation layer around the heat shrink component so that the thermal insulation layer encompasses the heat shrink component and the heating unit, heat dissipation to the outside is reduced, thus enhancing the amount of energy transferable into the heat shrink component compared to the case where the thermal insulation layer is thinner or not present at all.

It is clear for a person skilled in the art that any number of thermally insulating layers may be used. Moreover, also a gradually changing thickness of the thermal insulation layer can be used for generating in an axial direction a gradually changing temperature profile over time. The insulation layer may also have varying thermal insulation properties along its length while having essentially the same thickness.

At least one thermally insulating layer may be arranged around the heating unit to reduce in chosen areas the dissipation of heat to the outside, thereby enhancing the energy efficiency of the shrinking process. Moreover, one or more thermally insulating layers may also be provided between the heat spreading layer and the heat shrink layer to enhance the effect of the heat distribution in an axial and circumferential direction. Moreover, it was found that also meshes or films with cutouts can be used as thermally less conductive layers. Also a mesh formed from a non-organic fabric can be used as a thermally insulating layer.

The present invention also relates to a heat shrink component being equipped with a heating system according to the present invention. In particular, according to the present invention, a heat shrink component is provided that has first dimensions in an expanded state and second dimensions in a shrunk state, at least one of the first dimensions being larger than the corresponding second dimension. The heat shrink component comprises a heat shrink layer and a heating system as described above having at least two heating zones.

Advantageously, the at least one second heating zone is arranged between a peripheral end of said heat shrink component and the at least one first heating zone, and wherein said heating system is operable to provide a higher heating energy in the first heating zone during at least one period of time of the heat shrink process than in the second heating zone. Thereby, a gradual fast and reliable shrinking along the length of a heat shrink product can be achieved. Depending on the chosen approach for effecting the gradual shrinkage, relatively low costs and a minimal design space can be reached. Furthermore, a significantly improved handling compared to the use of an open flame is achieved.

According to an advantageous embodiment of the present invention, the heat shrink component has an essentially tube shaped form with a longitudinal axis, wherein the heating unit radially encompasses the heat shrink component, the first and second heating zones being spaced apart along said longitudinal axis. With this arrangement, a circumferentially uniform heating that proceeds in an axial direction can easily be provided.

Furthermore, by providing a heat spreading layer in thermal contact to the at least one electrically conductive lead for circumferentially distributing the heat generated by the electrically conductive lead, a more uniform distribution of the heat around the entire circumference of the heat shrink layer can be achieved. Therefore, heat peaks that might destroy or damage the heat shrink layer can be avoided or their likelihood can be significantly reduced. Advantageously, this concept allows running metal wires at high temperatures, while avoiding destruction of the material and the components of e. g. cable accessories. At the same time shrinking times of approximately 10 min can be achieved for a typical MV joint body.

It has to be noted that when referring to a "layer" in the following, it is not intended to mean that the object underneath has to be covered completely by the layer.

It was found that specific metal films and/or polymeric films and/or multilayer films (i. e. metal/polymeric combinations) used as a heat spreading layer are suitable to provide a more uniform heat distribution. Metal layers are distributing the heat energy between the wires. Polymeric films are to be selected among the high temperature resistant ones which do not get too soft and/or do not degrade too quickly when being subjected to the heat. The heat spreading films optionally can be coated with an adhesive, a hot melt, a lubricant, or the like to enclose the heating wires and further improve heat transfer in a circumferential and axial direction. The thickness of the heat spreading layer advantageously is in the range of several micrometers, preferably below 400 µm, in order to ensure that the heat spreading layer folds sufficiently smooth under the thermal and mechanical conditions when the heat shrink layer shrinks into the final size. If the heat spreading layer is positioned only locally, then the thickness is preferably below 1 mm. The heat spreading layer may comprise at least one metal layer. It has to be noted that the present invention is intended to encompass also cases where the heat spreading layer and the electrically conductive lead are formed as one integral metal film thereby providing a quite uniform, almost peakless heat transfer into the heat shrink layer.

A sufficient ease of folding is important for maintaining the mechanical contact of the heating unit to the heat shrink layer and is also important to avoid any damages to the surface of the heat shrink product. At the elevated temperatures during the shrinking process heat shrink layers are mechanically sensitive and the surfaces can be deformed or punctured easily.

For instance, copper or aluminium may advantageously be used. It is clear for a person skilled in the art that any other metal or metal alloy can also be employed. Copper and aluminium have the advantage that they have excellent heat conduction properties, while being corrosion resistant and cost effective.

Advantageously, the at least one heat spreading layer is arranged between the at least one electrically conductive lead and the heat shrink layer. This arrangement has the advantage that the heat spreading layer is in close proximity to the heat shrink layer, thus effectively transferring the generated heat into the heat shrink material. Moreover, heat peaks that might destroy or damage the heat shrink layer can be avoided, thus avoiding destruction of the material and the components of e. g. cable accessories.

Alternatively or additionally, a heat spreading layer can be provided that is arranged to encompass the at least one electrically conductive lead and the heat shrink layer. Such a construction is compatible with geometries where the electrically conductive leads are applied directly on the heat shrink layer, for instance in the form of printed conductive traces, or when embedded in layers that are co-extruded with the heat shrink layer.

According to an advantageous embodiment of the present invention, the electrically conductive lead is at least partly embedded within an embedding material. Means to embed the metal wire were found useful to reduce the chance of overheating the metal wires.

In order to achieve a short shrinking time (e.g. 10 minutes for an MV joint body), it is important to continuously supply heat all the time while the heat shrink product contracts. Using heat conduction as the means of heat transfer solves this object. In order to provide sufficient heat conduction, an intimate contact of the heating wires together with the heat spreading films and the embedding means located between the wires and the heat shrink layer and/or around the wires, has to be ensured. For instance, the heating unit can be adhesively bonded to the heat shrink layer. This is a particularly simple way of interconnecting all parts of the heat shrink component.

Alternatively or additionally, the heating unit is arranged on an outer surface of the heat shrink layer and the heat shrink component further comprises a compressing element, the electrically conductive lead being arranged between said compressing element and the heat shrink layer, so that the compressing element presses the electrically conductive lead towards the heat shrink layer at least during a part of the time while the heat shrink layer is heated, preferably during most or all of the heating time. The compressing element exerts a mechanical force directed towards the center of the heat shrink component, so that the entire heating unit or at least parts of it always remains in close contact with the heat shrink layer while the diameter of the heat shrink layer diminishes. The compressing element may for instance comprise a spring or a spring system or objects having an elastic behavior, such as elastomeric components, or an object with an elastic behavior at least at the thermal conditions when the heat shrink part shrinks, such as an additional heat shrink sleeve.

When using an electrically conductive lead with a comparably high electrical conductivity for heating a heat shrink layer of any kind of conductivity, including electrically insulating layers, and by setting the overall electrical resistance via the dimension of the lead's cross-section, the temperature for shrinking LV, MV, or HV heat shrink components in a sufficiently short time span can be reached using a length of the electrically conductive lead which is long enough to achieve a satisfactory percentage covering of the surface area. It could be shown that an electrically conductive lead with an electrical conductivity of more than 1·10⁷ S/m (for instance copper or aluminium) can have a length of about 1 to 15 m when the cross-sectional area is chosen accordingly (e. g. less than 0.4 mm diameter for a circular cross-section). The resulting overall resistance may for instance be in a range of 0.3 Ω to 6.0 Ω at 23 °C and the electrically conductive lead can be powered with 5 V to 25 V. Using a material with such comparably high electrical conductivity together with an appropriately reduced cross-sectional area therefore allows covering a larger amount of the surface area of the heat shrink component. More precisely, the circumferential distance between heating wires may be below 50 mm, preferably below 20 mm, in the non-recovered condition, thus remarkably reducing any issues with distributing the heating energy. Moreover, much cheaper wire materials can be used compared to using typical resistance wires.

The electrically insulating heat shrink layer is formed at least partly as a sleeve with a longitudinal axis for covering at least one electrical connection. Such sleeves are for instance part of high-voltage cable accessories.

High-voltage cable accessories are in use for the connection of high-voltage power cables to electrical equipment such as overhead lines, transformers, search arrestors, switchgears etc. They provide the function to either insulate or control the electrical field of power cables at different ambient conditions.

The term "high-voltage" as used in the following is intended to relate to voltages above approximately 1 kV. In particular, the term high-voltage is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint.

The present invention is also applicable to the so-called "low-voltage", LV, range that relates to voltages below 1 kV. The principles of the present invention may further be applied to heat shrink products used for electronic applications.

The expression "sleeve" according to the present invention is intended to signify straight tube shaped sleeves as well as differently shaped covers for branch joints, elbows, bends, breakouts, wrap-arounds, sheds, and the like.

According to the invention, the heating unit is arranged on an outer surface of the sleeve. This allows for an easy manufacturing of the heat shrink component. The heating unit may be arranged directly on the outer surface of the sleeve or with additional layers between the sleeve and the heating unit. However, the heating unit may of course also be arranged on the inner surface of the sleeve or within the sleeve or within a stack of at least two heat shrink sleeves, in order to protect the heating unit from being damaged before the installation takes place, or to improve heat transfer.

According to an advantageous embodiment of the present invention, the electrically conductive lead is formed by a metal wire having a cross-section with a round, oval, or polygonal shape. As mentioned above, the cross-section is formed to be small enough to generate an overall ohmic resistance that leads to a sufficient heating also with small safety voltages.

The electrically conductive lead according to the present invention may also be formed by an electrically conductive film. Such a thin electrically conductive film may be fabricated by etching and photolithography, or screen printing technologies as this is known to a person skilled in the art. Moreover, the electrically conductive film may either be fabricated directly on the heat shrink layer or on an intermediate layer or on a carrier layer or a foil that is attached to the heat shrink layer after the metallization pattern has been structured.

According to the present invention, the electrically conductive lead may be fabricated from copper or aluminium or alloys thereof. Advantageously, no expensive heating wire alloys, such as nickel chrome iron alloys or Constantan ^{®} are needed. However, also other metal alloys having the high conductivity according to the present invention may be used to form the electrically conductive lead.

The present invention further relates to a method of assembling a heat shrink component that has first dimensions in an expanded state and second dimensions in a shrunk state, at least one of the first dimensions being larger than the corresponding second dimension. The method comprises the following steps:
providing the heat shrink component in the expanded state, said heat shrink component comprising a heat shrink layer, and a heating system for heating a heat shrink component for at least parts of a heat shrink process, the heating system comprising at least one heating unit to be arranged in thermal contact to at least a part of said heat shrink component, said heating unit being operable to heat up the heat shrink component to its heat shrink temperature;
connecting an electrical power source to the heating unit;
heating up the heating unit in order to cause the heat shrink component to shrink to the second dimensions, wherein said heating system has at least one first heating zone and at least one second heating zone, and wherein said heating system is operated to provide differing heating energy in the first and second heating zones during at least one period of time of the heat shrink process.

Advantageously, a safety voltage, provided for instance from a battery, is used to heat up the heating unit. In the context of the present invention, "safety voltage" means for example a DC voltage that is below 60 V or an AC voltage of maximal 25 V RMS. Preferably, a battery generated DC voltage of 24 V is used. The heating preferably takes place for most of or all the time until the heat shrink component has reached the final shrunk dimensions.

According to an advantageous embodiment, the heat shrink component is an LV, MV, or HV cable accessory.

The method according to the present invention requires that the heat shrink component is heated to a temperature of at least 120 °C during a heating time of 20 min or less, depending on the wall thickness of the heat shrink component. This short time is compatible with the time span for shrinking conventional products with an open flame.

Due to the inherent large degree of diameter reduction of heat shrink cable accessories, the circumferential spacing of the heating wires decreases gradually during the shrinking process, resulting in an increasing heat density. This effect may be compensated by reducing the electric power fed into the electrically conductive leads over time. Thus, the heat input stays even over the shrinking time, and the risk of overheating is minimized.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic representation of a heat shrinking process;
- **FIG. 2**: is a schematic representation of a detail of a heating unit;
- **FIG. 3**: is a schematic representation of a detail of another heating unit;
- **FIG. 4**: is a schematic representation of a detail of another heating unit;
- **FIG. 5**: is a schematic representation of a detail of another heating unit;
- **FIG. 6**: is a comparison of several cross-sections of an electrically conductive lead usable with the present invention;
- **FIG. 7**: is a comparison of the cross-section of a conventional resistance heating wire to several cross-sections of an electrically conductive lead usable with the present invention;
- **FIG. 8**: is a schematic representation of a detail of another heating unit usable with the present invention;
- **FIG. 9**: is a schematic representation of a detail of another heating unit usable with the present invention;
- **FIG. 10**: is a schematic representation of a detail of another heating unit usable with the present invention;
- **FIG. 11**: is a schematic representation of a detail of another heating unit usable with the present invention;
- **FIG. 12**: is a detail of Fig. 11;
- **FIG. 13**: is a schematic representation of a detail of another heating unit usable with the present invention;
- **FIG. 14**: is a schematic representation of a detail of another heating unit usable with the present invention;
- **FIG. 15**: is a schematic representation of a detail of another heating unit usable with the present invention;
- **FIG. 16**: illustrates a step in the manufacturing of a heating unit;
- **FIG. 17**: is a schematic representation of a detail of another heating unit usable with the present invention;
- **FIG. 18**: illustrates the heat spreading mechanism of the heating unit according to Fig. 9;
- **FIG. 19**: illustrates the heat spreading mechanism of the heating unit according to Fig. 11;
- **FIG. 20**: illustrates the heat spreading mechanism of a further heating unit usable with the present invention;
- **FIG. 21**: illustrates the heat spreading mechanism of a further heating unit usable with the present invention;
- **FIG. 22**: illustrates the heat spreading mechanism of a further heating unit usable with the present invention;
- **FIG. 23**: illustrates the heat spreading mechanism of a further heating unit usable with the present invention;
- **FIG. 24**: illustrates the heat spreading mechanism of a further heating unit usable with the present invention;
- **FIG. 25**: is a schematic representation of a detail of a heat shrink;
- **FIG. 26**: is a schematic representation of a detail of a further heat shrink component;
- **FIG. 27**: is a schematic representation of a detail of a further heat shrink component;
- **FIG. 28**: is a schematic representation of a detail of a further heat shrink component;
- **FIG. 29**: is a schematic representation of a detail of a further heat shrink component;
- **FIG. 30**: is a schematic representation of a detail of a further heat shrink component;
- **FIG. 31**: is a schematic representation of a heating unit according to a first embodiment of the present invention;
- **FIG. 32**: is a schematic representation of a heating unit according to a further embodiment of the present invention;
- **FIG. 33**: is a schematic representation of a heating unit according to a further embodiment of the present invention;
- **FIG. 34**: is a schematic representation of a heating unit according to a further embodiment of the present invention;
- **FIG. 35**: is a schematic representation of a heating unit according to a further embodiment of the present invention;
- **FIG. 36**: is a schematic representation of a heating unit according to a further embodiment of the present invention;
- **FIG. 37**: is a schematic representation of a heating unit according to a further embodiment of the present invention;
- **FIG. 38**: is a schematic representation of a heating unit according to a further embodiment of the present invention;
- **FIG. 39**: is a schematic representation of two overlapping heating units according to an embodiment of the present invention;
- **FIG. 40**: is a schematic representation of a heating unit according to a further embodiment of the present invention;
- **FIG. 41**: is a schematic cross-sectional view of a heat shrink component according to a further embodiment of the present invention;
- **FIG. 42**: is a schematic cross-sectional view of a heat shrink component according to a further embodiment of the present invention;
- **FIG. 43**: is a schematic cross-sectional view of a heat shrink component according to a further embodiment of the present invention.

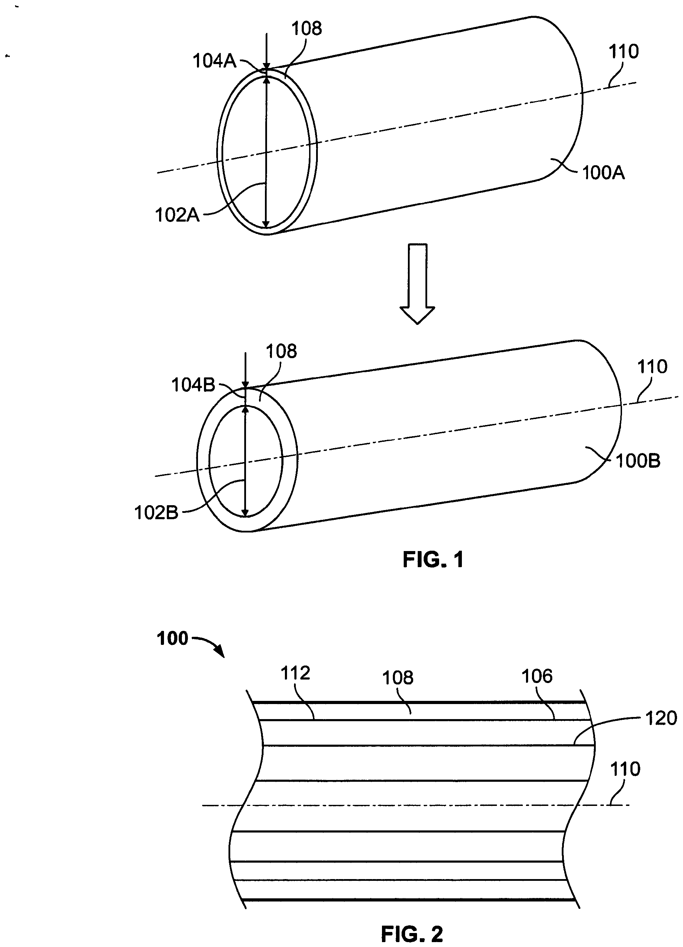

The present invention will now be further explained referring to the Figures, and firstly referring to Figure 1. Fig. 1 schematically illustrates the heat shrinking process of a heat shrinkable joint sleeve 100A, 100B having an essentially tubular shape with a longitudinal axis 110. The heat shrink sleeve 100A is in the expanded state where it has first dimensions. In particular, the heat shrink sleeve 100A in the expanded state has an inner diameter 102A which is larger than the outer diameter of a component to be covered (not shown in the Figures) and a wall thickness 104A that is thinner than in the finally mounted state.

By applying heat, the heat shrink sleeve is transformed from the expanded state 100A into a heat shrink sleeve in the shrunk state 100B (indicated by the arrow). In order to be shrunk under the influence of heat, the sleeve 100 comprises at least one heat shrink layer 108.

The present invention utilizes a heat-recoverable article (an independently dimensionally heat-unstable article) as the heat shrink layer 108. Of course, the heat shrink layer can be fabricated from any suitable material, as this is known to a person skilled in the art. Moreover, also multilayer arrangements that additionally comprise elastic layers are encompassed by the present invention. Heat shrink layers and/or elastic layers may comprise electrically insulating and/or electrically semi-conductive and/or conductive layers or components.

The shrunk sleeve 100B has an inner diameter 102B that fits tightly over the covered component (not shown in the Figures) and an enhanced wall thickness 104B as compared to the expanded state. As this is known to a person skilled in the art, the heat shrink process leads to a reduction of diameter of up to 75% of the diameter in the expanded state. As already mentioned above, the principles according to the present invention can be applied to straight tube shaped sleeves 100 as well as to differently shaped covers for branch joints, elbows, bends, and the like. The component onto which the sleeve 100 is shrunk may be cylindrical or it may have regions with a cross-section that is polygonal and/or that is varying along the longitudinal axis of the component.

According to the present invention, the heat shrinking step is performed by applying electrical energy via electrically conductive leads 106. Any type of electrically conductive leads can be used. For instance, resistance wires with electrical conductivities that are typically below 1·10⁷ S/m can be employed. Advantageously, the heat shrinking step may also be performed by applying electrical energy via electrically conductive leads 106 with an electrical conductivity of more than 3·10⁷ S/m.

Figures 2 to 5 illustrate examples of how the electrically conductive leads 106 that form a heating unit 120 can be arranged on a heat shrink product. The leads 106 may be positioned with direct contact to a heat shrink layer or may be positioned on a layer of non-shrink material, such as an elastomeric layer or a thermoplastic layer. Terminals are led to the outside for connecting a power source (not shown in the figures). Preferably, the power source is a battery supplying a DC voltage of e. g. 24 V. The entire length of the electrically conductive lead 106 is determined by the particular diameter and the resistance value that is to be reached and amounts to around 1 to 15 m when choosing a diameter in a range of 0.1 mm to 0.4 mm.

As can be seen from Fig. 2, a plurality of elongated wire sections 112 may be arranged in parallel to a longitudinal axis 110 of the heat shrink sleeve 100. The individual wire sections 112 may be serially interconnected in the fashion of a meandering structure to form one continuous electrical lead 106. Additionally, some of the longitudinal sections 112 may be interconnected to form an elongated closed loop, a plurality of those loops being interconnected in parallel. The sections 112 may either be arranged on the outside or on the inner surface of the heat shrink sleeve 100. Moreover, they may also be covered by further layers (as will be explained later). The sections 112 may also be arranged in different planes seen from the centre line 110.

The embodiment with the longitudinal wire sections 112 has the advantage, that upon shrinking of the heat shrink layer 108 the wire sections 112 become arranged closer to each other, but are not significantly deformed or dislocated. If the covered component has a polygonal cross-section and/or has dimensions that vary along the longitudinal axis, the wire sections conform to this outer silhouette to some extent. Still, no sharp edges or disruptions during the heat shrinking process can occur. This means that separations or areas of increased resistance due to strong deformation of the wires are less likely.

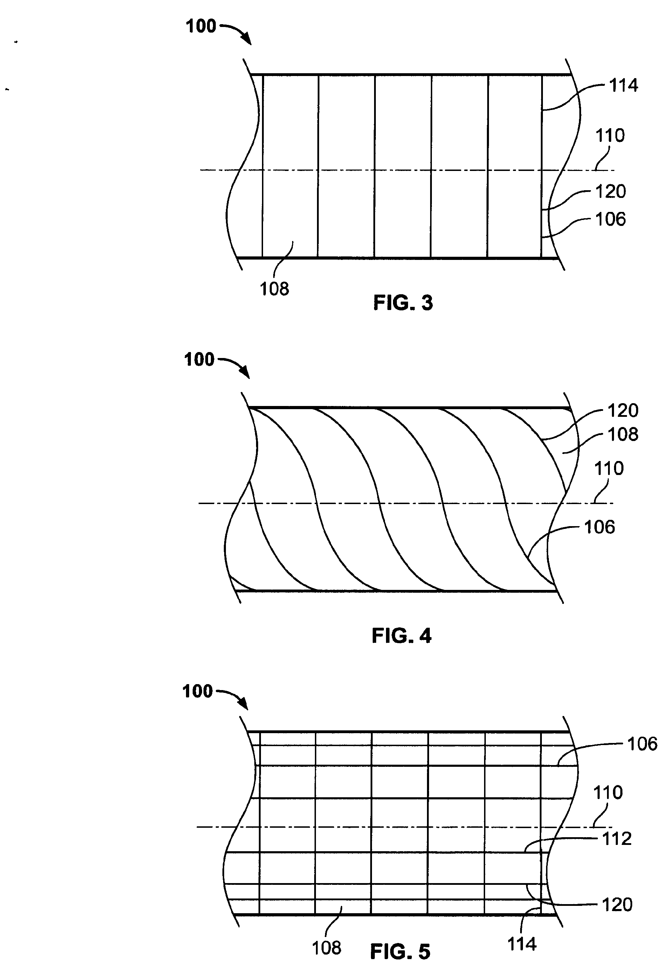

Fig. 3 shows an example where a plurality of ring-shaped wires 114 is arranged on the sleeve 100 to form the electrically conductive lead 106. These wire-rings 114 are arranged equidistantly along the longitudinal axis 110 and are essentially perpendicular to the longitudinal axis 110. Of course, the rings can also be arranged with varying distances between each other. Moreover, when using an elliptical shape instead of a circular geometry, the rings 114 can also be arranged to include an angle other than 90° with the longitudinal axis 110.

The rings 114 may electrically be connected in series and/or in parallel. For a serial connection, the ring may not be entirely closed around the circumference of the heat shrink sleeve 100.

Fig. 4 depicts an arrangement where one continuous electrically conductive lead 106 is wound in a helical configuration around the heat shrink layer 108. This configuration is particularly easy to be assembled. The windings may also be arranged with varying distances between adjacent turns.

It is apparent to a person skilled in the art that the above explained arrangements according to Figures 2, 3, and 4 can also be combined with each other as this is exemplarily depicted in Fig. 5. According to this example, one layer of longitudinal sections 112 is combined with one layer of ring-shaped wires 114, wherein it is arbitrary which layer is the top layer and which one the bottom layer. Also more than two layers can be combined to form a heating unit according to the present invention. Electrically, these layers may either be connected in parallel or serially.

Advantageously, the wires in the different layers are to be electrically insulated against wires of another layer. This may be achieved by using wires that are individually covered with an electrical insulation and/or by arranging an insulating material between adjacent layers of wire.

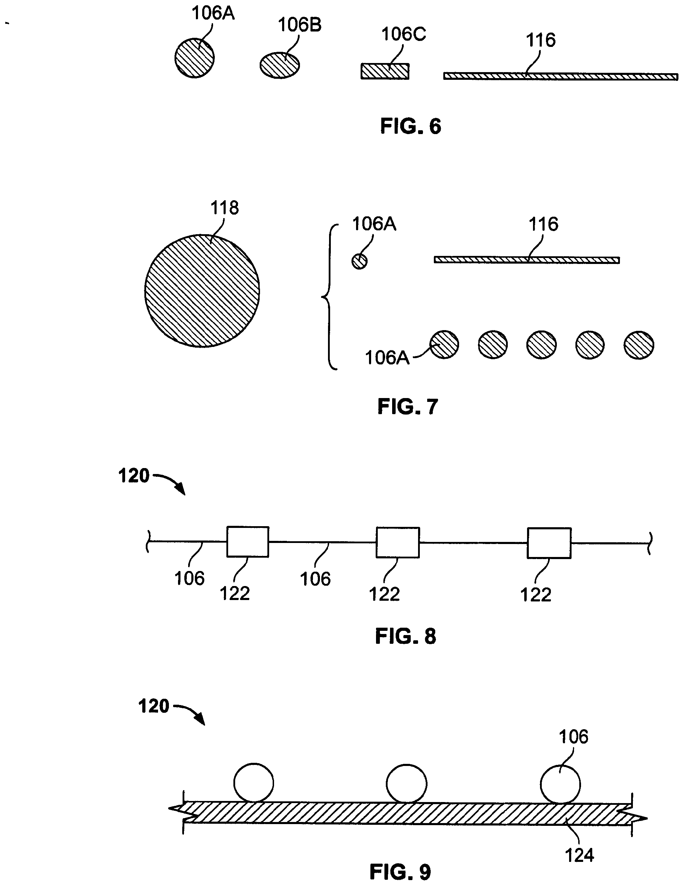

With reference to Figure 6, several examples of electrically conductive leads 106 according to the present invention are explained. The inventors of the present invention have recognized that an electrical resistance suitable for generating temperatures around 120°C and up to 450°C from safety voltages (e. g. 24 V DC) can also be realized with a highly conductive material when reducing the cross-sectional area and/or enhancing the length accordingly. The cross-section of the wires 106 may be circular (electrically conductive lead 106A), elliptic (electrically conductive lead 106B), or polygonal (electrically conductive lead 106C). Furthermore, the electrically conductive lead may also be formed by a thin film 116. It has to be noted, that the drawings are not exactly to scale throughout the Figures. In particular, the thickness of the electrically conductive film 116 is exaggerated.

The electrically conductive film 116 may for instance be formed from a metallization layer that is etched by means of a photolithography process. Alternatively, also screen printing or other printing techniques can be used for depositing the electrically conductive film 116 on the heat shrink layer, or on an additional layer, i. e. a thermoplastic film.

With reference to Figure 7, the electrical resistance of the electrically conductive lead according to the present invention will be explained in more detail. Fig. 7 shows arrangements that have the same electrical resistance, leading to the same heating effect when powered with the same voltage. In particular, the cross section of a standard resistance heating wire 118 is compared to a copper wire 106 or an electrically conductive copper film 116. When assuming that the copper wire 106A and the electrically conductive film 116 are having only 1% of the specific resistance of the resistance wire, they need to have a cross sectional area of only 1% of the cross-sectional area of the resistance wire 118 in order to provide the same overall resistance for a piece of lead having the same length.

Alternatively, a copper wire 106A having 20% of the cross-sectional area of the resistance wire 118 has the same resistance as the resistance wire 118, if the copper wire 106A has 5 times the length of the resistance wire 118.

Due to economic and reliability considerations, the number and diameter of the heating wires 106 needs to be within certain limits. In case that the wires 106 have very small diameters, their numbers and/or length need to be reduced. Otherwise, the resistance increases too much and voltages of 24 V or below cannot generate a sufficiently high current to heat up the wires to temperatures of at least 110°C. On the other hand, if the wires 110 have too large cross-sections, their resistance may become too low. Then the length has to be increased, in order to increase the resistance. Otherwise, the wires 106 would not be heated up sufficiently. Thereby costs are increased. A further option is to use (at least in particular areas of the heat shrink component) two or more electrical circuits of heating wires which are connected in parallel. The electrical current then splits up according to the relative resistance of the circuits. This allows choosing wires with smaller cross-sections, while achieving the same resulting resistance as with a larger size wire. In other words, two wires are connected in parallel and have each half of the cross-section compared to a benchmark wire. This principle, however, gets to some limits regarding economic considerations, such as the cost of fine wires relative to standard wires, and regarding reliability issues, because handling of extremely fine wires with diameters of less than 100 µm is cumbersome.

In addition to only using the electrically conductive lead 106 as the heating unit 120, also additional heating elements 122 can be provided. This embodiment is shown in Fig. 8.

According to one advantageous embodiment, the electrically conductive lead 106 generates only negligible amounts of heat. The main part of the heat is generated by the additional heating elements 122. The heating elements 122 may for instance be formed from semiconductor heating elements. The electrically conductive leads 106 that are interconnecting the heating elements 122 may either be formed as sections of wire, or by film-shaped electrically conductive leads. Any of the diameters explained with reference to Figure 6 can be employed.

Advantageously, the semiconductor heating elements 122 may have a positive temperature coefficient (PTC) so that an inherent overheating protection is provided.

Furthermore, according to a further advantageous embodiment, sensors may be added to the heat shrink component. These sensors can be configured to monitor and/or drive the heating and shrinking process and give feedback for instance to the cable jointer and/or the electric drive system e. g. whether the installation has been finished successfully. In particular, when realizing the heating unit as a thin film arrangement, the sensors and the heating unit can be formed on a common flexible substrate that is attached to the sleeve.

For all of the above illustrated arrangements of electrically conductive leads, means for spreading the heat generated by the electrically conductive leads around the circumference of the heat shrink layer 108 can be provided. A heat spreading layer 124 allows for a more even and/or faster energy input into the heat shrink layer 108. Furthermore, if the heat spreading layer is arranged between the heating wires 106 and the heat shrink layer 108, it is also suitable to avoid heat spikes and potential damage to the heat shrink layer 108.

As may be derived from Fig. 9, the heating unit 120 comprises (at least in particular areas of the heat shrink component 100) an additional heat spreading layer 124. The heat spreading layer 124 may for instance be formed from metal, such as copper or aluminum or alloys, or from a polymer which may be provided with an enhanced thermal conductivity by adding suitable fillers.

Furthermore, the heat spreading layer 124 may also comprise alternatively or additionally one or more metallic layers. Advantageously, the electrically conductive heating wires 106 do not come into direct contact with each other or an electrically conductive surface in order to avoid local short circuits that would influence the overall resistance of the entire heating system in an undefined way. Consequently, in case a metallic heat spreading layer 124 is provided in contact with the conductive leads 106, the individual leads may for instance be covered with a thin electrically insulating layer. In an exemplary arrangement, heating wires 106 may be attached to a heat shrink sleeve of a joint body in an axial direction (as shown in Figure 2), have a diameter of less than 500 µm and be circumferentially spaced from each other by about 5 mm to 30 mm. With this set up, a single film of copper or aluminium or alloys having a thickness of less than 400 µm is sufficient to remarkably contribute to an even shrinkage around the circumference of the joint body.

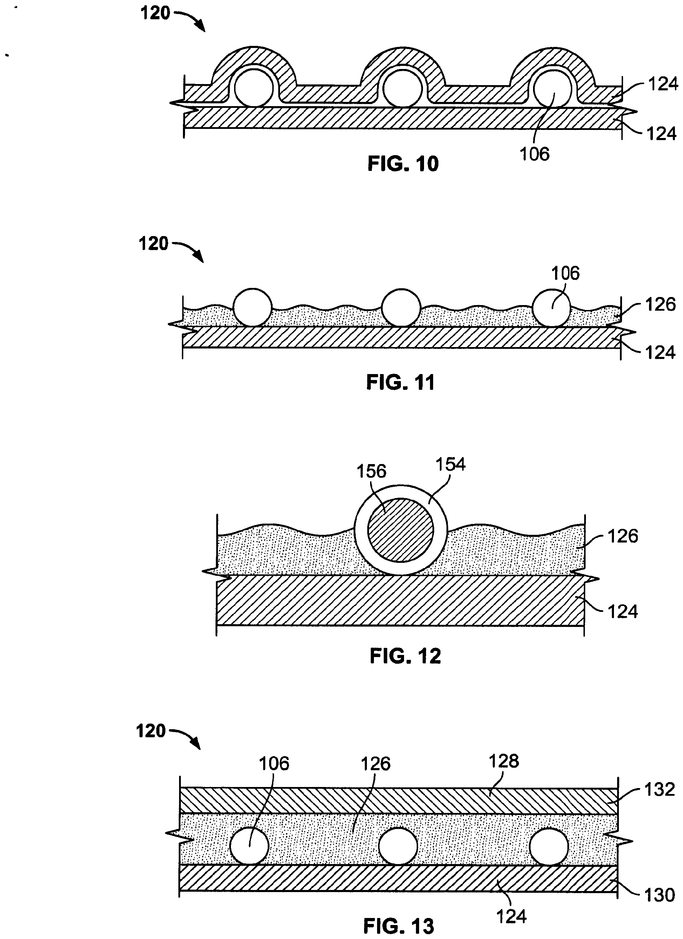

Fig. 10 shows a further advantageous arrangement, where a second heat spreading layer 124 is arranged to cover the electrically conductive leads 106.

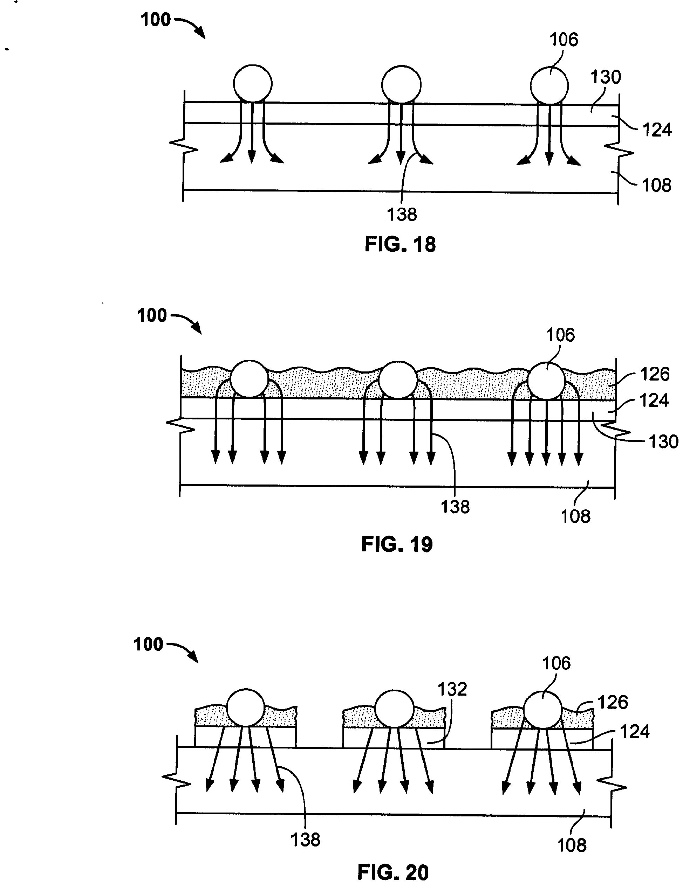

According to a further advantageous embodiment which is shown in Fig. 11, the electrically conductive leads 106 may at least partly be embedded within an embedding material 126. The embedding material 126 may for instance comprise an adhesive, a hot melt material, mastic, or a lubricant, or any other suitable material which at least partly encloses the electrically conductive lead 106 and improves the heat transfer towards the heat spreading layer 124, as will be explained in more detail with reference to Figures 18 to 24. Additional fillers in the above mentioned materials may improve the effect.

The electrically conductive leads 106 may comprise a metal lead 156 forming a core which is covered by an electrically insulating layer 154. This detail is depicted in Fig. 12.

Fig. 13 illustrates a further advantageous embodiment of the heating unit 120. According to this embodiment, the electrically conductive leads 106 are arranged on an electrically insulating plastic layer 130 and are completely surrounded by an embedding material 126. An additional cover layer 128 is arranged on top of the embedding material 126. As shown in Figure 13, the heat spreading layer 124 may be formed from an electrically insulating plastic layer 130, and the cover layer 128 is for instance formed from a metal layer 132. In other words, the electrically conductive leads 106 are arranged between the heat spreading layer 124 and the heat shrink layer 108 if the plastic layer 130 is attached to the heat shrink layer 108. However, it should be noted that the heating unit 120 according to Fig. 11 may also be attached to a heat shrink layer 108 with the metal layer 132 being in by a direct contact with the heat shrink layer 108. Due to the presence of an electrically insulating embedding material 126, the wires 106 do not necessarily have to be coated with an electrically insulating layer as shown in Fig. 12, but can be left bare.

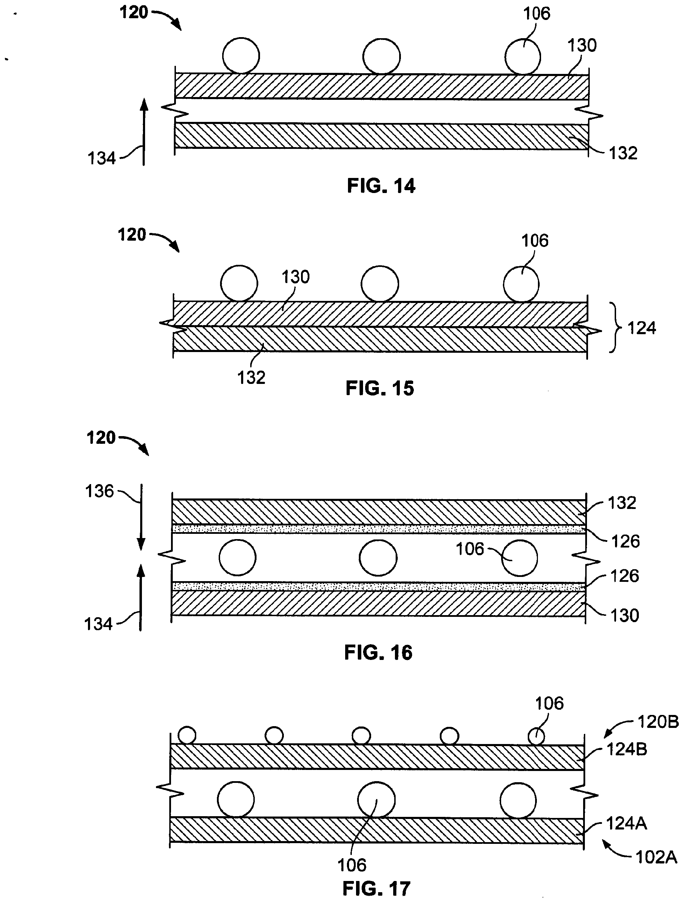

Fig. 14 and 15 illustrate a further advantageous embodiment of a heating unit 120 that allows for the heating wires 106 being without an insulation coating. According to this embodiment, the wires 106 are first attached to a plastic film 130. From the side opposing to the wires 106, a heat spreading metal layer 132 is attached as indicated by the arrow 134. Fig. 15 shows the finally assembled heating unit 120. The heat spreading layer 124 is therefore formed as a double layer comprising at least one metal layer 132 and at least one electrically insulating plastic layer 130.

According to a further advantageous embodiment as shown in Fig. 16, the metal layer 132 and the plastic layer 130 may both be covered with an adhesive that constitutes an embedding layer 126. The electrically conductive leads 106 are then sandwiched between these two films as indicated by the mounting directions 134 and 136. This embodiment has the advantage that the heating unit 120 can easily be handled. It has to be noted, that according to the present invention, the plastic layer 130 and/or the metal film 132 may function as a heat spreading layer 124. It may be freely chosen whether either the plastic layer 130 or the metal film 132 are arranged between the electrically conductive leads 106 and the heat shrink layer.

Fig. 17 shows a further advantageous embodiment with more than one heating unit 120A, 120B being stacked on top of each other. The heat spreading layer 124 may be formed from metal or plastic films. In order to avoid uncontrolled short circuits, the electrically conductive leads 106 may be coated with an electrically insulating layer, once metal films are used.

With reference to Figures 18 to 24, the heat spreading concept according to the present invention will be explained in more detail for various advantageous embodiments of the heat shrink component 100.

Fig. 18 shows a first embodiment, where a heating wire 106 is arranged on a heat shrink layer 108, for instance a heat shrink sleeve, with an additional plastic heat spreading layer 124. As indicated by the arrows 138, the heat flow is deviated in a way that the heat shrink layer 108 does not experience the same temperature peaks as it would experience if in direct contact with the wires 106. Accordingly, damages by excessive heat can be avoided at the heat shrink layer 108.

When additionally providing a layer of an embedding material 126, more heat arrives at the heat shrink layer 108 and the heat is more evenly distributed. This arrangement is depicted in Figure 19. The electrically conductive leads 106 do not have to be electrically insulated, if the embedding material 126 and the heat spreading layer 124 are electrically insulating.

With respect to the embodiments explained above it was always assumed, that the heat spreading layer 124 is a continuous layer which covers a larger part of the heat shrink layer 108. However, as illustrated in Fig. 20, the heat spreading material 124 may also only be provided close to the electrically conductive leads 106. Advantageously, the heat spreading material is formed by traces of metal film 132 directly underlying the electrically conductive wires 106. Advantageously, an adhesive forms the embedding material 126 which at least partly surrounds the wires 106 and facilitates handling during the manufacturing process.

As can be seen from a comparison with Fig. 19 where a plastic layer 130 is used, the arrangement according to Fig. 20 achieves almost the same degree of heat spreading, and in particular avoids spikes of high temperature at the heat shrink layer 108 to about the same degree. If the heat spreading layer is positioned only locally as shown in Fig. 20, then its thickness is preferably below 1 mm.

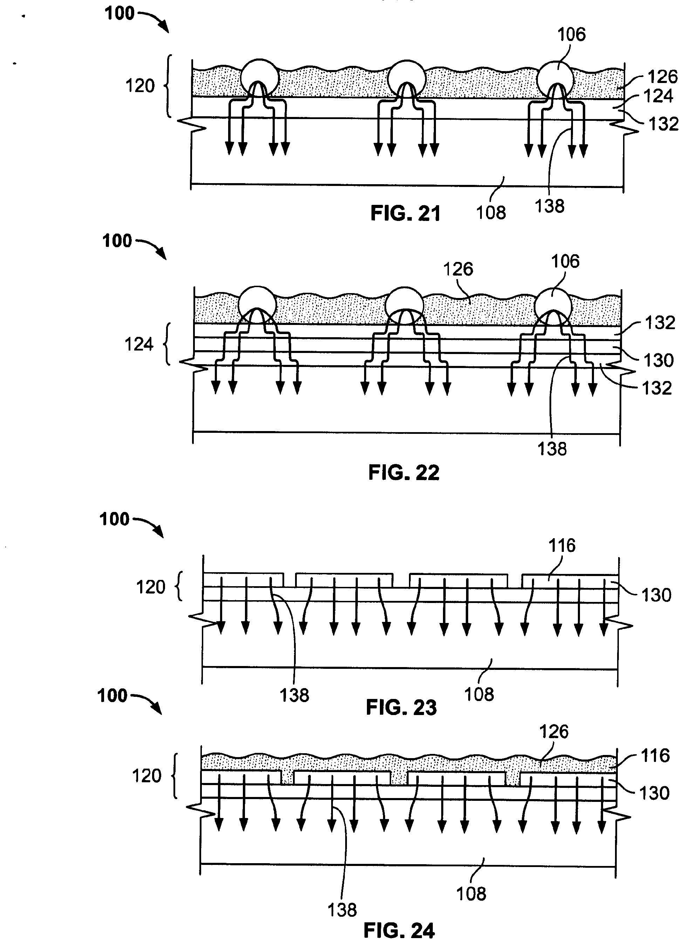

Fig. 21, on the other hand, shows an arrangement with a continuous metal film 132 forming the heat spreading layer 124. An embedding material 126 at least partly encompasses the electrically conductive leads 106. As schematically indicated by the arrows 138, the heat flow is distributed in a direction across to the thickness of the metal layer 132 within the plane of the metal layer 132 due to the high thermal conductivity of the material. Moreover, the heat flow is deviated in a way that the heat shrink layer 108 does not experience the same temperature peaks as it would experience if in direct contact with the wire 106. Accordingly, damages by excessive heat can be avoided at the heat shrink layer 108. By additionally providing a layer of an embedding material 126, more heat which is evenly distributed arrives at the heat shrink layer 108. The electrically conductive leads 106 do not have to be electrically insulated, if the embedding material 126 is electrically insulating, but is preferred for reliability reasons.

Of course, one or more layers with higher and lower thermal conductivity may also be arranged preferably in an alternating manner to form a multilayer heat spreading layer. An example of such a multilayer heat spreading layer 124 is depicted in Fig. 22. According to this example, a heat spreading layer with a high thermal conductivity, for instance a metal layer 132, is arranged on the heat shrink layer 108. The metal layer 132 is covered by a layer with a lower thermal conductivity, for instance a plastic layer 130. The electrically conductive leads 106 are arranged on a second metal layer 132 which is deposited on top of the plastic layer 130. Advantageously, the electrically conductive leads 106 are embedded at least partially within an embedding material 126. As indicated by the arrows 138, the heat flow is strongly spread by the metal layers 132 within the respective plane of the layer. On its way from the wires 106 to the heat shrink layer 108, the heat is spread quite uniformly so as to provide an even energy input around the circumference of the heat shrink component 100 and to avoid any destructive temperature peaks at the heat shrink layer 108. With this arrangement and also with the arrangements explained referring to the other Figures, the heat spreading layer allows to run the heating wires at much higher temperatures, ensuring an accelerated shrinking process taking place and being more uniform across the entire product.

A similar pattern of the heat distribution can be reached by forming the heating unit 120 from a flexible foil 130 with a printed pattern of electrically conductive film traces 116. The flexible foil 130 may for instance be a polymeric carrier film fabricated from polyimide (PI), comprising copper layers that form the electrically conductive traces 116, as shown in Fig. 23. Due to the fact that the electrically conductive film is in contact with its substrate not only along a comparatively small surface area as this is the case with wires having for instance circular cross-sections, the heat is already distributed over a larger area compared to a heating wire 106. Moreover, the PI foil 130 further spreads the generated heat as indicated by the heat flow arrows 138. Of course, an additional cover layer, preferably also fabricated from the same material as the carrier foil, may also be added. An additional metal layer arranged between the PI foil 130 and the heat shrink layer 108 (not shown in the Figure) increases heat transfer. Such a metal layer may also support to have only smaller pieces of such a heating system to be arranged on the heat shrink layer 108, thus reducing the costs in some cases.

Furthermore, as shown in Fig. 24, the electrically conductive film traces 116 may also be covered by an embedding material 126.

It has to be mentioned that there are commercially available plastic films with different layer thickness of copper (e. g. between 5 µm and 75 µm). These dimensions of course lead to different widths of the conductive films 116, thus covering the circumference to different percentages.

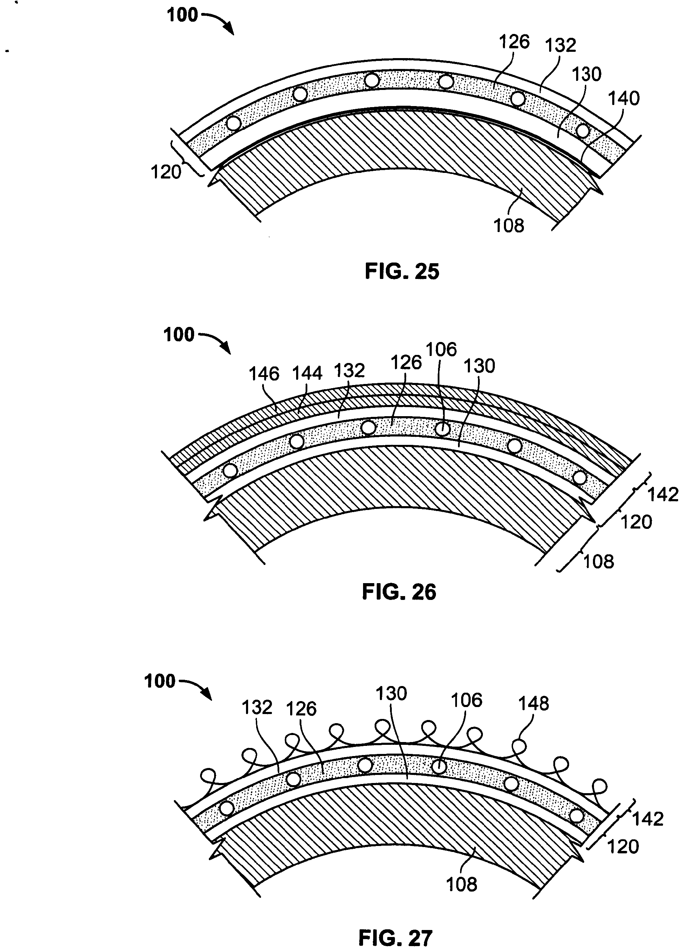

As already mentioned above, an intimate contact between the heating unit 120 and the heat shrink layer 108 is needed for an optimal heat transfer to the heat shrink layer 108. Fig. 25 shows an advantageous embodiment where the heating unit 120 is firmly bonded to the heat shrink layer 108 at the interface 140. The heating unit 120 shown in Fig. 25 is structured as shown in Fig. 13 exemplarily. It is clear for a person skilled in the art, however, that any of the other heating units according to the present invention may also be bonded to the surface of the heat shrink layer 108. Unless an adhesive is used for bonding the heating unit 120 to the heat shrink layer 108, it is advantageous that the layer of the heating unit 120 which is part of the interface 140 (or at least a surface layer) is a plastic material that can be chemically bound to the surface of the heat shrink layer 108.

According to a further advantageous embodiment of the present invention, one or more additional compressing layers 142 may be provided for pressing the heating unit 120 towards the heat shrink layer 108. Optimally, the compressing layer 142 keeps the heating unit 120 in close contact to the heat shrink layer 108 during the complete heat shrink procedure. However, some degree of delamination and therefore loss of the intimate contact can be tolerated and still allows a reasonable shrinking performance because the heating wires 106 also generate a noticeable amount of heating radiation. It is also important to transfer a high amount of heat energy into the heat shrink layer until it starts to contract. After that, a relatively small amount of heat is to be transferred. As shown in Fig. 26, the compressing layer 142 may comprise a second heat shrink layer 144 and a pre-stretched elastomeric layer 146. Of course, the compressing layer 142 may also comprise only a second heat shrink layer 144 or a pre-stretched elastomeric layer 146.

Additionally, or alternatively, as shown in Fig. 27, the compressing element 142 may comprise a spring 148 or a spring system comprising a plurality of springs for pressing the heating unit 120 onto the heat shrink layer 108.

It has to be mentioned that the second heat shrink layer 144 and the pre-stretched elastomeric layer 146 may be formed as more than one short ring.

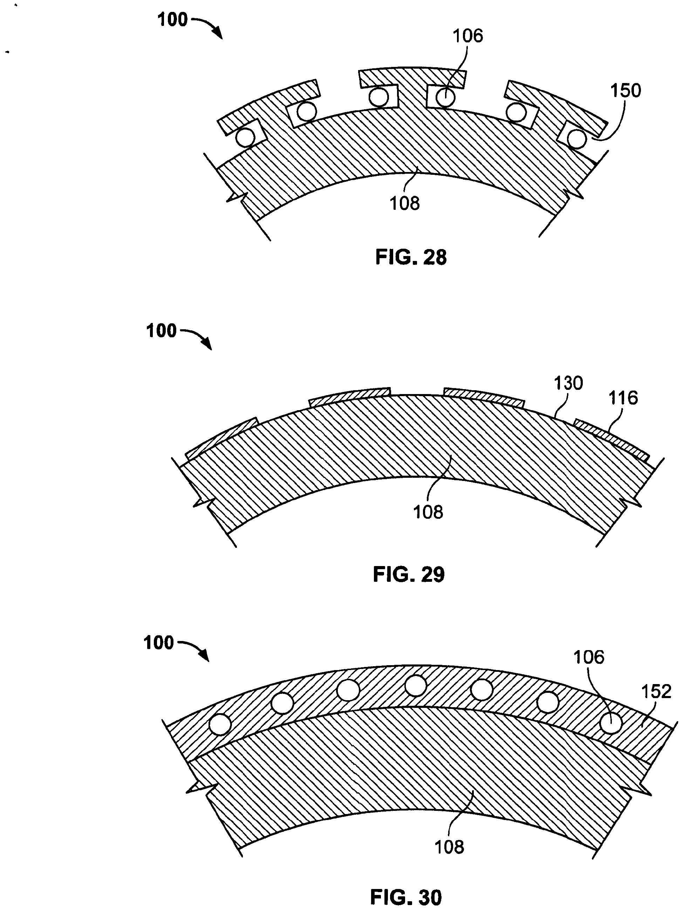

Figures 28 to 30 show examples of how the electrically conductive lead 106 can be brought into tight, albeit heat conducting and/or heat spreading contact with the heat shrink layer 108. Firstly, as shown in Fig. 28, the electrically conductive lead may be received in accordingly formed recesses 150 of the heat shrink layer 108, thereby establishing a form fit. Moreover, the electrically conductive leads 106 can be embedded in an embedding material (not shown in this Figure). A heat spreading layer (not shown in the Figure) may be added to encompass the arrangement.

In case that the electrically conductive lead is formed by an electrically conductive film 116, same can be attached to the heat shrink layer 108 directly or via an electrically insulating film 130. This arrangement is shown in Fig. 29. For instance, a thin, structured metal film 116 can be bonded to the surface, or the conductors 116 are printed onto the surface of the heat shrink layer 108. Alternatively, as this is known for printed circuit board (PCB) fabrication, the surface of the heat shrink layer 108 may also be coated with a metal layer which is then patterned by means of an etching step.

Furthermore, as shown in Fig. 30, the electrically conductive leads 106 may also be embedded within an embedding material and/or additional heat shrink layer 152 that is in tight contact with the heat shrink layer 108. The embedding step may for instance be performed by co-extrusion.

It has to be noted that with any of the arrangements explained above, air pockets have to be avoided because the air expands from room temperature to 120 °C and above remarkably, resulting in air bubbles that are large enough to hinder a sufficient heat spreading and/or generate unwanted deformations of the heat shrink product. Thus, the heat shrink component may be damaged unless the presence of air bubbles is avoided to a sufficient extent.

The present invention provides-in combination with any one of the above described arrangements-a heating system that avoids entrapment of air between the heat shrink layer and any object that is to be covered by the heat shrink component. According to the present invention, the term "heating system" is intended to signify an arrangement comprising at least one heating unit that can be attached to a heat shrink layer and optionally one or more heat spreading layers that may have one or more covering layers, and may have one or more thermally insulating layers, and may have compressing elements.

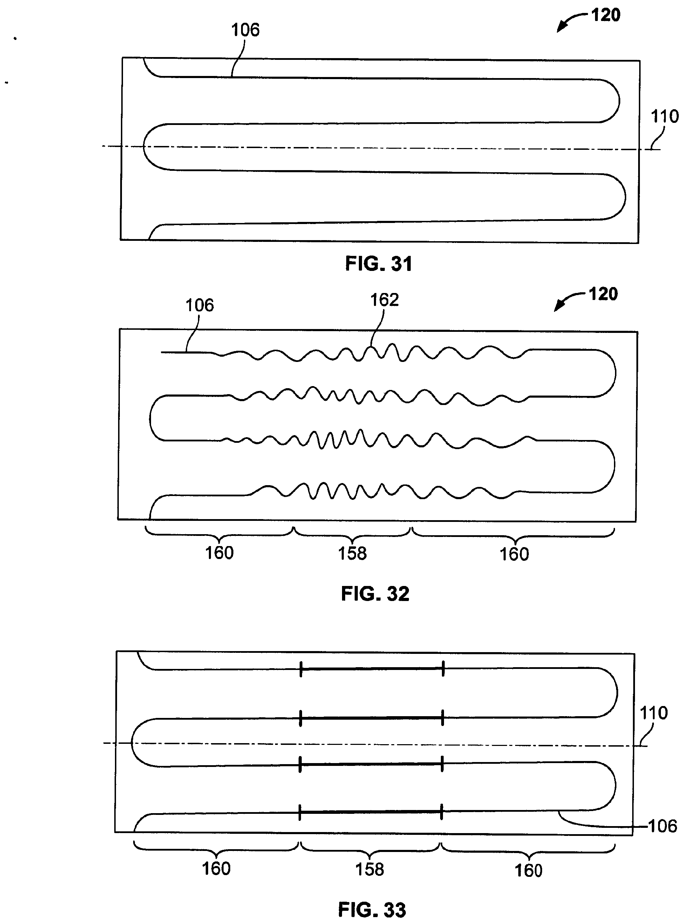

As shown in Fig. 31, a heating unit 120 may be arranged in one part or along the complete length of a heat shrink component 100 (as shown in Fig. 1). The heating unit 120 comprises an electrically conductive lead 106 that is arranged in a meandering fashion so that the main part of the electrically conductive lead 106 extends along a longitudinal axis 110. When the heat shrink process is performed, the meander loops of the electrically conductive lead 106 move closer together.

Fig.32 shows one heating unit 120. In order to form a first heating zone 158 and two second heating zones 160, the electrically conductive lead 106 is arranged in the first heating zone to form tight undulations 162 in order to cover a larger area on the heat shrink layer than in the second zones 160. Due to the undulations 162 more heat and thus in many cases a higher temperature is generated in the first heating zone 158 compared to the second zones 160 when the electrically conductive lead 106 is energized by applying an electrical current through it. Consequently, the heat shrink process starts in the first heating zone 158 and then advances along the longitudinal axis 110 towards the second heating zones 160 and to the peripheral ends of the heat shrink component.

As schematically indicated in Fig. 32, there is a smooth transition in the density of the undulations 162 from the central first heating zone 158 towards the straight arrangement at the end of the second heating zones 160. This geometry allows for a gradual temperature profile along the longitudinal axis 110 at least at the beginning of the heating process.

It is clear for a person skilled in the art, that any suitable form of the undulations 162 may be chosen in order to cover a larger area with the electrically conductive lead 106 in the first heating zone 158. For instance a zigzag structure may also be used. It is also clear that a distinct geometrical definition of the ends of the zones 160 and 158 cannot be made, any suitably shape can be used according to the present invention.

In Fig. 33 the electrically conductive lead 106 has a different material and/or a reduced cross-section in the first heating zone 158. This arrangement also leads to a higher temperature in the first heating zone 158 when the electrically conductive lead 106 is energized by applying an electrical current through it. Consequently, the heat shrink process starts in the first heating zone 158 and then advances in two directions along the longitudinal axis 110 towards the second heating zones 160 and to the peripheral end of the heat shrink component.

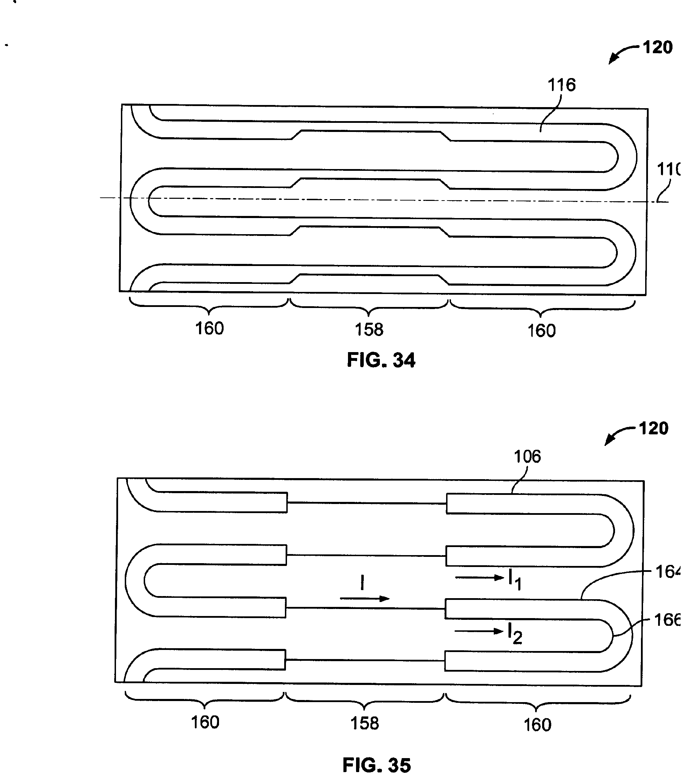

In Fig. 34 a structured conductive trace (also called film) 116 is used as the electrically conductive lead. For instance by etching or a photolithographic technique the electrically conductive film 116 is formed to have smaller cross-sectional dimensions in the first heating zone 158 compared to the dimensions it has in the second heating zones 160. When the electrically conductive film 116 is energized by applying an electrical current, the resistance is higher in the first heating zone 158 compared to the resistance in the second heating zone 160. Consequently, the heat shrink process starts in the first heating zone 158 and then advances in two directions along the longitudinal axis 110 towards the second heating zones 160 and to the peripheral end of the heat shrink component.

In Fig. 35, the heating unit 120 has an electrically conductive lead 106 which is formed by a wire. According to this particular embodiment, the wire is laid as a single wire in the first heating zone 158 and splits into two branches 164 and 166 which are electrically connected in parallel. Consequently, an electrical current I that is flowing through the electrically conductive lead in the first heating zone 158 is divided into two smaller currents I₁ and I₂ in the first and second branches 164, 166 with I = I₁ + I₂. The smaller currents I₁ and I₂ cause a lower temperature in the second heating zones 160. Consequently, the heat shrink process starts in the first heating zone 158 and then advances in two directions along the longitudinal axis 110 towards the second heating zones 160 and to the peripheral end of the heat shrink component.

It is clear for a person skilled in the art, that of course also more than two wires may be connected in parallel in the second heating zones 160 and that also in the first heating zone more than one wire can be present being connected in parallel, as long as the current flowing through the wires arranged in the second heating zones 160 is lower than the current flowing through the wires in the first heating zone 158. It is also clear that the cross-section and/or the material of the wires in the first heating zone 158 and the second heating zones 160, meaning in the first and second branches 164, 162 may not be identical.

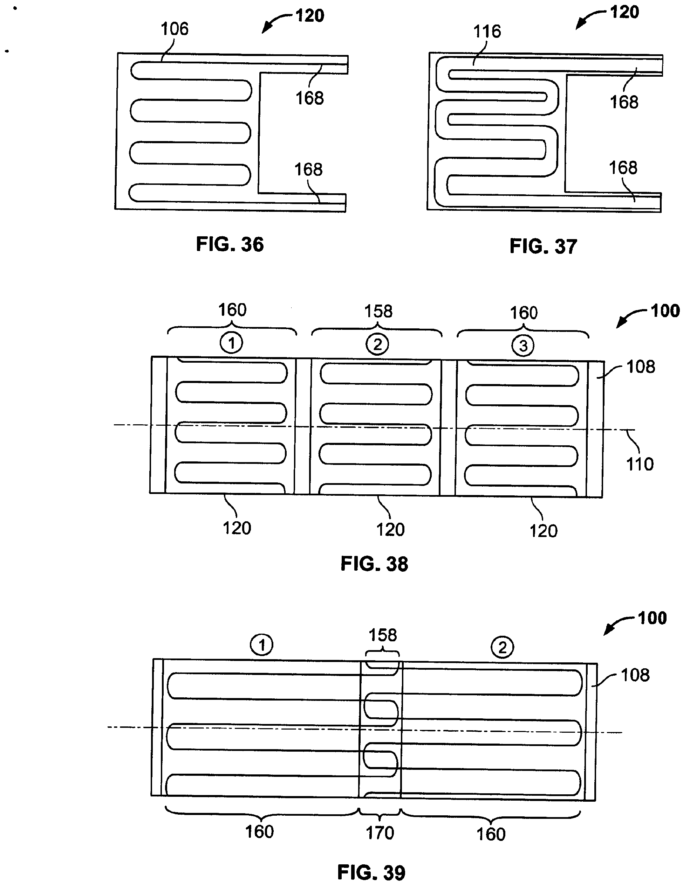

According to a further concept of the present invention, that will be explained in the following with reference to Figures 36 to 38, the heating unit 120 is smaller than explained with reference to Figures 32 to 35. Consequently, the heating unit 120 only covers a limited region of a heat shrink component 100. The heating unit 120 may either comprise a wire forming the electrically conductive lead 106 (see Fig. 36) or a printed or etched metal film 116 as shown in Fig. 37. Each heating unit 120 has terminals 168 to connect a power source (not shown in the Figures).

According to the present invention and as shown in Fig. 38, a heat shrink component 100 may be covered by three heating units 120 which are arranged along the longitudinal axis 110. Each of the heating units 120 may be formed as shown in Fig. 36 or 37. The three heating units 120 are controllable independently from each other to be provided with an electrical current via their terminals 168 (not shown in the Figure), so that three heating zones as indicated by the encircled numbers 1 to 3 are formed. For instance, the center zone may be a first heating zone 158 which is energized before the second heating zones 160, so that a higher temperature is reached first in the first heating zone 158 and later in the second heating zones 160. Again, the heat shrink process starts in the first heating zone 158 and then advances in two directions along the longitudinal axis 110 towards the second heating zones 160 and to the peripheral end of the heat shrink component.

However, these three heating units 120 may also be controlled differently, so that for instance one of the peripheral heating units is energized first, the others following sequentially. Any suitable temperature profile may be chosen for achieving a heat shrink process that avoids the inclusion of air and leads to a uniform and high performance heat shrink product. For instance, in order to speed up the heating process, the heating units with the encircled numbers 1 and 3 may be started to be energized at the same time as the one with the encircled number 2, but with a lower current. This scheme leads to a pre-heating effect which allows a faster shrinking later when the pre-heating heating units are fully energized.

According to a further advantageous embodiment, as shown in Fig. 39, two or more heating units 120 according to Figures 36 or 37 may also be arranged on a heat shrink layer 108 in a way that an overlapping area 170 is created. This overlapping area 170 has a higher density of heating wires and therefore forms a first heating zone 158 which reaches a higher temperature earlier than the second heating zones 160. Consequently, also with this embodiment the heat shrink process starts in the first heating zone 158 and then advances in two directions along the longitudinal axis 110 towards the second heating zones 160 and to the peripheral end of the heat shrink component. The width of the first heating zone 158 may be larger than the overlap 170, depending also on the material and thickness of the heat shrink product.

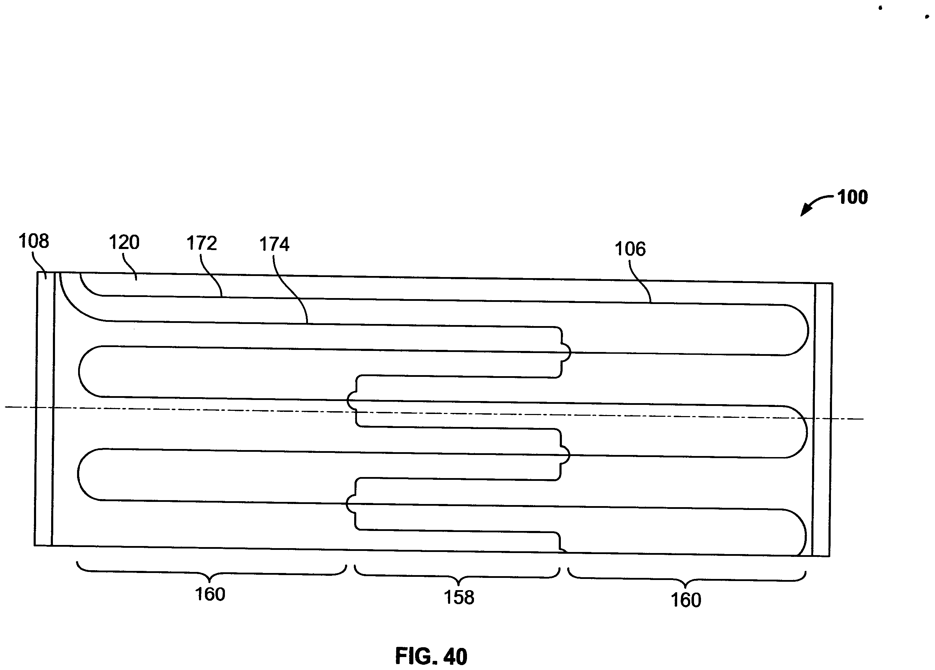

A similar effect can also be achieved by using two traces of wire 106 on one heating unit 120, as shown in Fig. 40. In the first heating zone 158 the heating wire is laid with a higher density compared to the second heating zones 160. Consequently, a higher temperature is reached earlier in the first heating zone 158 compared to the second heating zones 160. Therefore, also with this embodiment the heat shrink process starts in the first heating zone 158 and then advances in two directions along the longitudinal axis 110 towards the second heating zones 160 and to the peripheral end of the heat shrink component. Advantageously, the electrically conductive leads 106 are arranged to form two independent electric circuits 172, 174 arranged on one carrier film. The first electric circuit 172 is advantageously electrically insulated from the second electric circuit 174.

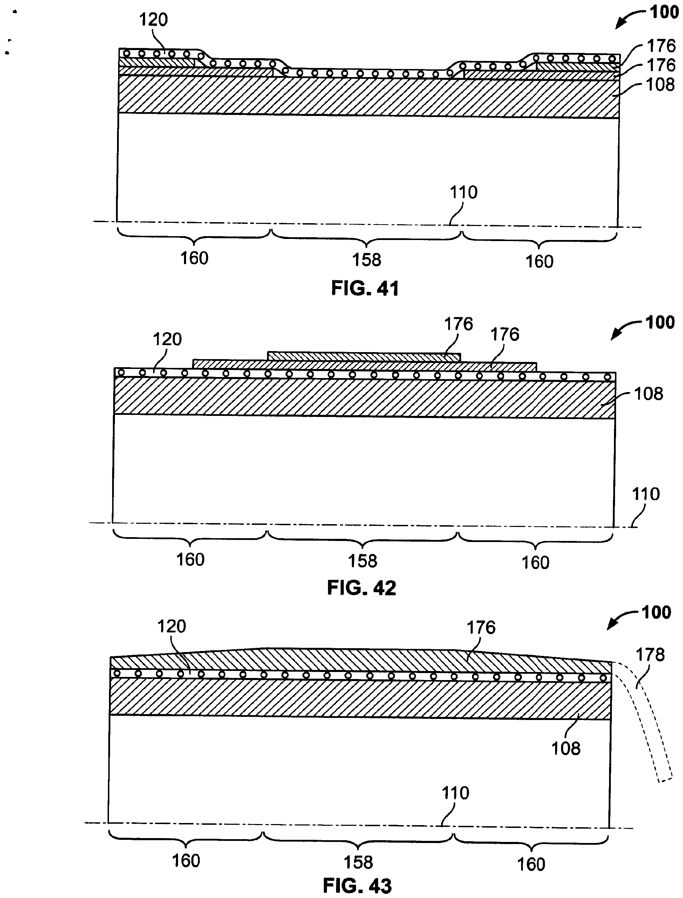

Fig. 41 shows a cross-sectional view of a heat shrink component 100 according to a further advantageous embodiment of the present invention. According to this embodiment, the heat shrink layer 108 is in direct contact with the heating unit 120 only in the first heating zone 158. In the second heating zones 160, one or more thermal insulation layers 176 are arranged between the heating unit 120 and the heat shrink layer 108. This geometry leads to a delayed heat input to the heat shrink layer 108 in the second heating zones 160, compared to the first heating zone 158. Consequently, also with this embodiment the heat shrink process starts in the first heating zone 158 and then advances in two directions along the longitudinal axis 110 towards the second heating zones 160 and to the peripheral end of the heat shrink component.

As shown in Fig. 41, more than one thermal insulation layers 176 may be arranged with a mainly constant thickness in order to achieve a gradual temperature profile along the longitudinal axis 110. It is clear for a person skilled on the art that the thickness of the thermally insulating layer 176 may change continuously and/or the thermally insulating properties may change along the axis 110, while for instance having the same layer thickness.

According to a further embodiment, which is illustrated in Fig. 42, one or more thermally insulating layers 176 may also be arranged to encompass the heating unit 120 and the heat shrink layer 108. The heating unit 120 is therefore arranged closer to the heat shrink layer 108 than the thermal insulation layer 176. In this configuration, the thermal insulation has the effect that in the first heating zone 158 a more efficient heating is achieved by redirecting the heat towards the heat shrink layer 108. Consequently a higher temperature is achieved earlier in the first heating zone 158 compared to the second heating zones 160. As shown in Fig. 42, more than one thermal insulating layers are provided to achieve a changing thickness in order to generate a gradual temperature profile along the longitudinal axis 110.

Of course, any suitable number, shape, and thermal properties of the thermally insulating layers 176 may be provided according to the present invention.

A further alternative to achieve a gradual temperature profile is shown in Fig. 43. According to this embodiment, the thermal insulating layer is a single layer with a thickness that changes over the axial direction and has its highest value in the first heating zone 158, gradually diminishing its thickness in the second heating zones 160. Advantageously, the thermal insulation layer 176 covers the entire heat shrink product 100 as an additional protective layer and optionally may further have an extension 178 that closes the arrangement during the heat shrink process at least partly against the environment.

In this configuration, the thermal insulation 176 has the effect that in the first heating zone 158 a more efficient heating is achieved by redirecting the heat towards the heat shrink layer 108. Consequently a higher temperature is achieved in the first heating zone 158 compared to the second heating zones 160. A gradual temperature profile along the longitudinal axis 110 is achieved. With regards to Fig. 43 it becomes again apparent that a sharp distinction between the first and second heating zones 158, 160 cannot be made. It also has to be mentioned that in the ideal case there are no two zones rather than an area 158 where to start, which e. g. covers parts of the central area of a cable joint where the connector and the Faraday cage of the heat shrink layer 108 are sitting, and which then continuously advances towards the ends.

In summary, the present invention provides options to shrink widely used energy products, like LV, MV, and even HV joint bodies, terminations, sleeves (such as rejacketing sleeves), and molded parts (such as break outs, boots, and caps) without using an open flame and instead using electrical energy. Because the application typically is a field installation, the power source beneficially uses batteries, either available in the van of the cable jointer staff or to be carried to the place of installation. Alternatively, a generator, either available in the van or transportable over limited distances, can be used. For safety reasons, the voltage can be limited to values in the magnitude of 20 V, at maximum 24 V. In order to be compatible with installation times that are reached using open flames, the shrink times of a typical MV joint body should not exceed a maximum of 10 minutes.

In order to achieve short shrink times, heating wires and films may have temperatures as high as possible, preferably above the destruction temperatures of the heat shrink products. Means to avoid temperature spikes mainly address the issue of local destruction. Furthermore, the means may help significantly to spread heat energy to be transferred into the heat shrink component, ensuring that the heat transfer ideally happens all over the entire surface area.

A further advantage of the heat spreading layer is to act as thermal insulation against the environment and to create an additional heat capacity, which both improve the overall quality and reliability of the heat shrink process.

The present invention proposes different approaches for providing a gradual shrinkage of a heat shrink product.

According to a first approach for gradual shrinkage, more than one heating unit is positioned on the outside of the heat shrink product, forming a heating system. A heating unit is defined as a system of metal conductors that can be connected to a power source and which are arranged on a carrier, for instance a film, for the purpose of proper and economical production and handling. By providing more than one heating unit with individual connections to a power source and/or a drive system, it is possible to run different power and/or temperature profiles for these heating units. For instance, one heating unit may be powered first and the second heating unit is powered later.

Sensors may additionally be used to allow the control system to drive the gradual shrink process, for instance by providing different power over time. Typical examples of arrangements as explained above include heating systems that have one heating unit for the center and one for either end portion, or one heating unit for the center, one for either middle section and one for either end portion.

It was further found that these heating units may advantageously be configured unequally in their construction. For instance, the number, type, and arrangement of the metal conductors can be varied, polymeric films and other objects around the metal conductors may vary in material, size, and arrangement. Also the relative axial positioning of the heating units on the heat shrink product, such as a sleeve, may be chosen in different ways. Furthermore, at least two independent circuits of metal wire arrangements may be positioned on one common substrate, for instance one film.

In order to achieve a gradual shrinkage, the heat transfer may be controlled to be uneven over the length of the heat shrink product. Layers with a relatively low coefficient of thermal conduction due to the material and/or their construction (for instance their surface, overall shape, and/or included air cavities) may be arranged radially inwardly and/or radially outwardly relative to the heating conductors. A different external or internal thermal insulation was also found important to speed the shrinkage in general and may be chosen to differ over the length of the heat shrink product to enable or support a gradual shrinkage behavior.

Finally, a further approach for achieving a gradual shrinkage is to vary the structure and/or length of the heating conductors along the length of the heat shrink product. An uneven amount and size of undulations of the heating conductors generates a differing heat transfer. For instance, if metal wires are laid with undulations in a circumferential direction versus having the same metal wires laid in straight axial direction, this geometry creates a higher heat transfer. The areas of undulations create more heat per length of the heat shrink product compared to the areas with straight wires.

Beside undulations of the same metal conductors, the arrangement of varying number of parallel circuits is another way of creating an uneven heat transfer. Also the resistance of one metal conductor may be changed along its length and thus over the length of the heat shrink product. This can be done by changing the cross-section and/or the material.

It was found that in some cases the end portions have a remarkably higher dissipation of heat and the center portions of the heat shrink sleeve. End portions in the sense of the present invention are described as the areas between 1 and 50 mm from the end, in most cases around 30 mm.

Heating systems using thermal insulation and/or different and/or separate heating units are proposed according to the present invention to guarantee proper shrinkage.

If there is more than one heating system, these may be energized differently during the heat shrink process, thus creating a gradual shrinking.

The present invention can advantageously be employed with the following exemplary specific dimensions and characteristics.

Although any kind of heating wires can be used according to the present invention, in addition to conventional resistance wires also wires with a conductivity of at least 1·10⁷ S/m can be used. The power source provides preferably a voltage that is a DC voltage below 60 V or an AC voltage of maximal 25 V RMS.

Moreover, the cross-sectional area of the heating conductor is between 0.007 mm² and 0.8 mm², equaling to wires of 0.1 to 1.0 mm diameter. Conductive films must have according dimensions, typically these films have thicknesses in the range of 5 µm to 25 µm. The temperature of the conductor during the heating is at least 120 °C, max. 450 °C. The value of 120°C is a typical shrink temperature for heat shrink products. There are variants that shrink at 110°C and a very special material which is not used on energy products starts to shrink at 65°C. Given temperature losses to the environment, the temperature of the conductors must be far above 120°C.

The above parameters define a broad working space. Depending on the geometry of the heat shrink product and the conductors the heating system can be defined for instance according to the following examples.

A typical MV joint body has a wall thickness of 3.5 mm of the heat shrink layer (plus elastomeric layer), a length of 420 mm and an outer diameter of 68 mm (surface area is 9 dm²). In successful trials six heating units with 3.3 meter of wire each (diameter 0.22 mm) were used. With a power source providing < 24 V these six heating units were connected in parallel and heated up to 200°C to 350°C. The shrink time was 10 min, using thermal insulation and heat spreading means.

If the wire diameters are chosen smaller, then each heating unit must have less meters of wire. Accordingly, more than six heating units are to be configured to allow a 24 V power source to heat up the heat shrink component to the required temperatures.

If another heat shrink product has less surface area, then a lower number of heating units (thus less meters of wire) are needed.

If another heat shrink product has lower wall thickness, then a comparably lower number of heating systems and less meters of wire are needed. The dependency on the wall thickness does not seem linear. It appears that even a stack of multiple heat shrink sleeves resulting in 10 mm total wall thickness can be heated with about the same settings as the typical MV joint body having a wall thickness of 3.5 mm.

### REFERENCE NUMERALS

| **Reference Numeral** | **Description** |
|---|---|
| 100, 100A, 100B | Heat shrink sleeve, heat shrink component |
| 102A, 102B | Inner diameter |
| 104A, 104B | Wall thickness |
| 106, 106A, 106B, 106C | Electrically conductive lead |
| 108 | Heat shrink layer |
| 110 | Longitudinal axis |
| 112 | Longitudinal wire section |
| 114 | Wire ring |
| 116 | Electrically conductive film |
| 118 | Resistance wire |
| 120,120A, 120B | Heating unit |
| 122 | Heating element |
| 124 | Heat spreading layer |
| 126 | Embedding material |
| 128 | Cover layer |
| 130 | Plastic layer |
| 132 | Metal layer |
| 134 | Mounting direction |
| 136 | Mounting direction |
| 138 | Heat flow |
| 140 | Interface between heat shrink layer and heating unit |
| 142 | Compressing element |
| 144 | Second heat shrink layer |
| 146 | Elastomeric layer |
| 148 | Spring |
| 150 | Recess |
| 152 | Additional heat shrink layer |
| 154 | Electrically insulating layer on metal lead |
| 156 | Metal lead |
| 158 | First heating zone |
| 160 | Second heating zone |
| 162 | Undulations |
| 164 | First branch |
| 166 | Second branch |
| 168 | Terminals |
| 170 | Overlapping area |
| 172 | First electric circuit |
| 174 | Second electric circuit |
| 176 | Thermal insulation layer |
| 178 | Extension |

## Claims

1. Heat shrink component that has first dimensions (102A, 104A) in an expanded state and second dimensions (102B, 104B) in a shrunk state, at least one of the first dimensions (102A) being larger than the corresponding second dimension (102B), and said heat shrink component (100, 100A, 100B) comprising:
a heat shrink sleeve with a heat shrink layer (108), and
a heating system for heating the heat shrink layer (108) of the heat shrink component (100, 100A, 100B) during a heat shrink process, the heating system comprising
at least one first heating unit (120) and at least one second heating unit (120) arranged Z on a surface of the heat shrink sleeve and in
mechanical and thermal contact to at least a part of said heat shrink sleeve, said heating units allowing to heat up the heat shrink layer (108) to its heat shrink temperature,
wherein said heating system has at least one first heating zone (158) and at least one second
heating zone (160), wherein the at least one first heating unit (120) is arranged in the at least one first heating zone (158) and the least one second heating unit (120) is arranged in the at least one second heating zone (160), said heating system is operable to provide differing heating energy in the
first and second heating zones (158, 160) during at least one period of time of the heat shrink process,
wherein the heat shrink sleeve has an essentially tube shaped form with a longitudinal axis (110), and wherein the heating unit (120) radially encompasses the heat shrink component, the first and second heating zones being arranged along said longitudinal axis (110).

2. Heat shrink component according to claim 1, wherein the first and second heating units (120) are arranged to be overlapping in an overlapping region (170), so as to form said first heating zone (158) in the overlapping region (170) and to form said at least one second heating zone (160) in a non-overlapping region.

3. Heat shrink component according to one of the preceding claim 1, wherein said at least one first heating unit (120) and/or said at least one second heating unit (120) comprise at least one electrically conductive lead (106, 116) for being heated by an electrical current flowing through the lead (106, 116) and wherein said electrically conductive lead is arranged to cover a larger area in the first heating zone (158) compared to the area it covers in said at least one second heating zone (160).

4. Heat shrink component according to one of the preceding claims, wherein said at least one
first heating unit (120) and/or said at least one second heating unit (120) Z comprise at least one electrically conductive lead (106, 116) for being heated by an electrical current flowing through the lead (106, 116) and wherein said electrically conductive lead has a different cross-section in the first heating zone (158) compared to the cross-section it has in the second heating zone (160) and/or wherein said electrically conductive lead has a different specific conductivity in the first heating zone (158) compared to the specific conductivity it has in the second heating zone (160).

5. Heat shrink component according to one of the preceding claims, further comprising at least one thermal insulation layer (176) arranged in the first heating zone (158) and/or in the second heating zone (160).

6. Heat shrink component according to claim 5, wherein the at least one thermal insulation layer (176) is arranged between the heat shrink layer (108) and the heating unit (120) in the at least one second heating zone (160) for reducing the amount of energy transferable into the heat shrink component compared to the at least one first heating zone (158).

7. Heat shrink component to claim 5 or 6, wherein the at least one thermal insulation layer (176) encompasses the heat shrink layer (108) and the heating unit (120) in the first heating zone (158) for enhancing the amount of energy transferable into the heat shrink layer (108) compared to the second heating zone (160).

8. Heat shrink component according to one of the preceding claims, wherein the electrically conductive lead comprises a metal wire (106) having a cross-section with a round, oval, or polygonal shape and/or wherein the electrically conductive lead comprises an electrically conductive film (116).

9. Heat shrink component according to claim 10, wherein the at least one second heating zone (160) is arranged between a peripheral end of said heat shrink component and the at least one first heating zone (158), and wherein said heating system is operable to provide a higher heating energy in the first heating zone (158) during at least one period of time of the heat shrink process than in the second heating zone (160).

10. Heat shrink component according to one of the claims 1 to 9, wherein the heating unit (120) comprises at least one electrically conductive lead (106, 116) for being heated by an electrical current flowing through the lead (106, 116), and at least one heat spreading layer (124) arranged in thermal contact to the at least one electrically conductive lead (106) for circumferentially distributing the heat generated by the electrically conductive lead (106).

11. Heat shrink component according to one of the claims 1 to 10, wherein the heat shrink component (100) further comprises a compressing element (142), the electrically conductive lead (106) being arranged between said compressing element (142) and the heat shrink layer (108), so that the compressing element (142) presses the electrically conductive lead (106) towards the heat shrink layer (108) at least for parts of the time while the heat shrink layer is heated.

12. Method of assembling a heat shrink component that has first dimensions (102A, 104A) in an expanded state and second dimensions (102B, 104B) in a shrunk state, at least one of the first dimensions (102A) being larger than the corresponding second dimension (102B), and the method comprising the following steps:
providing the heat shrink component (100) in the expanded state, said heat shrink component (100) comprising a heat shrink sleeve with a heat shrink layer (108), and a heating system for heating a heat shrink component for at least parts of a heat shrink process, the heating system comprising
at least one first heating unit (120) and at least one second heating unit (120) to be arranged on a surface of the heat shrink sleeve and
in mechanical and thermal contact to at least a part of said heat shrink sleeve, said heating units (120) allowing to heat up the heat shrink layer (108) to its heat shrink temperature ,
connecting an electrical power source to the heating unit (120,
heating up the heating unit (120) in order to cause the heat shrink component (100) to shrink to the second dimensions, wherein said heating system has at least one first heating zone (158) and at least one second heating zone (160), wherein the at least one first heating unit (120) is arranged in the at least one first heating zone (158) and the least one second heating unit (120) is arranged in the at least one second heating zone (160), and wherein said heating system is
operated to provide differing heating energy in the first and second heating zones (158, 160) during at least one period of time of the heat shrink process,
wherein the heat shrink sleeve has an essentially tube shaped form with a longitudinal axis (110), and wherein the first and second heating units (120) are arranged to radially encompass the heat shrink component, the first and second heating zones (158, 160) being arranged along said longitudinal axis (110).

## Patentansprüche

1. Warmschrumpf-Komponente, die in einem gedehnten Zustand erste Abmessungen (102A, 104A) hat und in einem geschrumpften Zustand zweite Abmessungen (102B, 104B) hat, wobei wenigstens eine der ersten Abmessungen (102A) größer als die entsprechende zweite Abmessung (102B) und die Warmschrumpf-Komponente (100, 100A, 100B) umfasst:
einen Warmschrumpf-Schlauch mit einer Warmschrumpf-Schicht (108), sowie
ein Heizsystem zum Erwärmen der Warmschrumpf-Schicht (108) der Warmschrumpf-Komponente (100, 100A, 100B) während eines Warmschrumpf-Prozesses, wobei das Heizsystem umfasst:
wenigstens eine erste Heiz-Einheit (120) und wenigstens eine zweite Heiz-Einheit (120), die an einer Oberfläche des Warmschrumpf-Schlauchs und in mechanischem sowie thermischem Kontakt mit wenigstens einem Teil des Warmschrumpf-Schlauchs angeordnet sind, wobei die Heiz-Einheiten Erwärmen der Warmschrumpf-Schicht (108) auf ihre Warmschrumpf-Temperatur zulassen,
das Heizsystem wenigstens eine erste Heizzone (158) und wenigstens eine zweite Heizzone (160) aufweist, wobei die wenigstens eine erste Heiz-Einheit (120) in der wenigstens einen ersten Heizzone (158) angeordnet ist, die wenigstens eine zweite Heiz-Einheit (120) in der wenigstens einen zweiten Heizzone (160) angeordnet ist und das Heizsystem so betrieben werden kann, dass es während wenigstens einer Zeitspanne des Warmschrumpf-Prozesses unterschiedliche Heizenergie in der ersten und der zweiten Heizzone (158, 160) erzeugt,
wobei der Warmschrumpf-Schlauch eine im Wesentlichen röhrenartige Form mit einer Längsachse (110) hat, die Heiz-Einheit (120) die Warmschrumpf-Komponente radial umschließt und die erste sowie die zweite Heizzone entlang der Längsachse (110) angeordnet sind.

2. Warmschrumpf-Komponente nach Anspruch 1, wobei die erste und die zweite Heiz-Einheit (120) so angeordnet sind, dass sie sich in einem Überlappungsbereich (170) überlappen, um die erste Heizzone (158) in dem Überlappungsbereich (170) auszubilden und die wenigstens eine zweite Heizzone (160) in einem Nicht-Überlappungsbereich auszubilden.

3. Warmschrumpf-Komponente nach dem vorangehenden Anspruch 1, wobei die wenigstens eine erste Heiz-Einheit (120) und/oder die wenigstens eine zweite Heiz-Einheit (120) wenigstens eine elektrisch leitende Leitung (106, 116) umfassen/umfasst, die durch einen durch die Leitung (106, 116) fließenden elektrischen Strom erwärmt wird, und die elektrisch leitende Leitung so angeordnet ist, dass sie in der ersten Heizzone (158) eine größere Fläche als die Fläche abdeckt, die sie in der wenigstens einen zweiten Heizzone (160) abdeckt.

4. Warmschrumpf-Komponente nach einem der vorangehenden Ansprüche, wobei die wenigstens eine erste Heiz-Einheit (120) und/oder die wenigstens eine zweite Heiz-Einheit (120) wenigstens eine elektrisch leitende Leitung (106, 116) umfassen/umfasst, die durch einen durch die Leitung (106, 116) fließenden elektrischen Strom erwärmt wird, und wobei die elektrisch leitende Leitung in der ersten Heizzone (158) einen anderen Querschnitt hat als in der zweiten Heizzone (160) und/oder wobei die elektrisch leitende Leitung in der ersten Heizzone (158) eine andere spezifische Leitfähigkeit hat als in der zweiten Heizzone (160).

5. Warmschrumpf-Komponente nach einem der vorangehenden Ansprüche, die des Weiteren wenigstens eine Wärmeisolier-Schicht (176) umfasst, die in der ersten Heizzone (158) und/oder in der zweiten Heizzone (160) angeordnet ist.

6. Warmschrumpf-Komponente nach Anspruch 5, wobei die wenigstens eine Wärmeisolier-Schicht (176) zwischen der Warmschrumpf-Schicht (108) und der Heiz-Einheit (120) in der wenigstens einen zweiten Heizzone (160) angeordnet ist, um die in die Warmschrumpf-Komponente übertragbare Energiemenge gegenüber der wenigstens einen ersten Heizzone (158) zu verringern.

7. Warmschrumpf-Komponente nach Anspruch 5 oder 6, wobei die wenigstens eine Wärmeisolier-Schicht (176) die Warmschrumpf-Schicht (108) und die Heiz-Einheit (120) in der ersten Heizzone (158) umgibt, um die in die Warmschrumpf-Schicht (108) übertragbare Energiemenge gegenüber der zweiten Heizzone (160) zu vergrößern.

8. Warmschrumpf-Komponente nach einem der vorangehenden Ansprüche, wobei die elektrisch leitende Leitung einen Metalldraht (106) umfasst, der einen Querschnitt mit einer runden, ovalen oder polygonalen Form hat und/oder wobei die elektrisch leitende Leitung einen elektrisch leitenden Film (116) umfasst.

9. Warmschrumpf-Komponente nach Anspruch 10, wobei die wenigstens eine zweite Heizzone (160) zwischen einem Umfangsende der Warmschrumpf-Komponente und der wenigstens einen ersten Heizzone (158) angeordnet ist, und das Heizsystem so betrieben werden kann, dass es in der ersten Heizzone (158) während wenigstens einer Zeitspanne des Warmschrumpf-Prozesses eine höhere Heizenergie erzeugt als in der zweiten Heizzone (160).

10. Warmschrumpf-Komponente nach einem der Ansprüche 1 bis 9, wobei die Heiz-Einheit (120) wenigstens eine elektrisch leitende Leitung (106, 116) umfasst, die durch einen durch die Leitung (106, 116) fließenden elektrischen Strom erwärmt wird, und wenigstens eine Wärmeverteilungs-Schicht, 132) umfasst, die in thermischem Kontakt mit der wenigstens einen elektrisch leitenden Leitung (116) angeordnet ist, um die durch die elektrisch leitende Leitung (116) erzeugte Wärme in Umfangsrichtung zu verteilen.

11. Warmschrumpf-Komponente nach einem der Ansprüche 1 bis 10, wobei die Warmschrumpf-Komponente (100) des Weiteren ein Kompressionselement (142) umfasst, die elektrisch leitende Leitung (106) zwischen dem Kompressionselement (142) und der Warmschrumpf-Schicht (108) so angeordnet ist, dass das Kompressionselement (142) die elektrisch leitende Leitung (106) wenigstens über einen Teil der Zeit, während der die Warmschrumpf-Schicht erwärmt wird, in Richtung der Warmschrumpf-Schicht (108) drückt.

12. Verfahren zum Zusammenbauen einer Warmschrumpf-Komponente, die in einem gedehnten Zustand erste Abmessungen (102A, 104A) hat und in einem geschrumpften Zustand zweite Abmessungen (102B, 104B) hat, wobei wenigstens eine der ersten Abmessungen (102A) größer ist als die entsprechende zweite Abmessung (102B) und das Verfahren die folgenden Schritte umfasst:
Bereitstellen der Warmschrumpf-Komponente (100) in dem gedehnten Zustand, wobei die Warmschrumpf-Komponente (100) einen Warmschrumpf-Schlauch mit einer Warmschrumpf-Schicht (108) sowie ein Heizsystem zum Erwärmen der Warmschrumpf-Komponente über wenigstens Teile des Warmschrumpf-Prozesses umfasst, das Heizsystem wenigstens eine erste Heiz-Einheit (120) und wenigstens eine zweite Heiz-Einheit (120) umfasst, die an einer Oberfläche des Warmschrumpf-Schlauchs und in mechanischem sowie thermischem Kontakt mit wenigstens einem Teil des Warmschrumpf-Schlauchs angeordnet sind, und die Heiz-Einheiten (120) Erwärmen der Warmschrumpf-Schicht (108) auf ihre Warmschrumpf-Temperatur zulassen,
Verbinden einer Elektroenergie-Quelle mit der Heiz-Einheit (120);
Aufheizen der Heiz-Einheit (120), um die Warmschrumpf-Komponente (100) auf die zweiten Abmessungen schrumpfen zu lassen, wobei das Heizsystem wenigstens eine erste Heizzone (158) und wenigstens eine zweite Heizzone (160) aufweist, die wenigstens eine erste Heiz-Einheit (120) in der wenigstens einen ersten Heizzone (158) angeordnet ist, die wenigstens eine zweite Heiz-Einheit (120) in der wenigstens einen zweiten Heizzone (160) angeordnet ist, und das Heizsystem so betrieben wird, dass es während wenigstens einer Zeitspanne des Warmschrumpf-Prozesses in der ersten und der zweiten Heizzone (158, 160) unterschiedliche Heizenergie erzeugt,
wobei der Warmschrumpf-Schlauch eine im Wesentlichen röhrenartige Form mit einer Längsachse (110) hat, die erste sowie die zweite Heiz-Einheit (120) so angeordnet sind,
dass sie die Warmschrumpf-Komponente radial umschließen, und die erste sowie die zweite Heizzone entlang der Längsachse (110) angeordnet sind.

## Revendications

1. Composant thermorétractable qui présente des premières dimensions (102A, 104A) dans un état expansé et des deuxièmes dimensions (102B, 104B) dans un état rétracté, au moins l'une des premières dimensions (102A) étant supérieure à la deuxième dimension correspondante (102B), ledit composant thermorétractable (100, 100A, 100B) comprenant :
un manchon thermorétractable avec une couche thermorétractable (108), et
un système de chauffe pour chauffer la couche thermorétractable (108) du composant thermorétractable (100, 100A, 100B) durant un processus de thermorétraction, le système de chauffe comprenant
au moins une première unité de chauffe (120) et au moins une deuxième unité de chauffe (120) agencées sur une surface du manchon thermorétractable et en contact mécanique et thermique avec au moins une partie dudit manchon thermorétractable, lesdites unités de chauffe permettant de chauffer la couche thermorétractable (108) jusqu'à sa température de thermorétraction,
dans lequel ledit système de chauffe comporte au moins une première zone de chauffe (158) et au moins une deuxième zone de chauffe (160), dans lequel ladite au moins une première unité de chauffe (120) est agencée dans ladite au moins une première zone de chauffe (158) et ladite au moins une deuxième unité de chauffe (120) est agencée dans ladite au moins une deuxième zone de chauffe (160), ledit système de chauffe étant fonctionnel pour procurer une énergie de chauffe différente dans les première et deuxième zones de chauffe (158, 160) durant au moins une période du processus de thermorétraction,
dans lequel le manchon thermorétractable est conformé essentiellement comme un tube avec un axe longitudinal (110), et dans lequel l'unité de chauffe (120) enclôt radialement le composant thermorétractable, les première et deuxième zones de chauffe étant agencées selon ledit axe longitudinal (110).

2. Composant thermorétractable selon la revendication 1, dans lequel les première et deuxième unités de chauffe (120) sont agencées pour se chevaucher dans une région de chevauchement (170), de manière à former ladite première zone de chauffe (158) dans la région de chevauchement (170) et à former ladite au moins une deuxième zone de chauffe (160) dans une région de non-chevauchement.

3. Composant thermorétractable selon la revendication 1 qui précède, dans lequel ladite au moins une première unité de chauffe (120) et/ou ladite au moins une deuxième unité de chauffe (120) comprennent au moins un fil électroconducteur (106, 116) destiné à être chauffé par un courant électrique qui circule dans le fil (106, 116), et dans lequel ledit fil électroconducteur est agencé pour recouvrir une surface de la première zone de chauffe (158) supérieure à la surface qu'il recouvre dans ladite au moins une deuxième zone de chauffe (160).

4. Composant thermorétractable selon l'une des revendications précédentes, dans lequel ladite au moins une première unité de chauffe (120) et/ou ladite au moins une deuxième unité de chauffe (120) comprennent au moins un fil électroconducteur (106, 116) destiné à être chauffé par un courant électrique qui circule dans le fil (106, 116) et dans lequel ledit fil électroconducteur présente une section transversale dans la première zone de chauffe (158) qui diffère de sa section transversale dans la deuxième zone de chauffe (160) et/ou dans lequel ledit fil électroconducteur présente une conductivité électrique dans la première zone de chauffe (158) qui diffère de sa conductivité électrique dans la deuxième zone de chauffe (160) .

5. Composant thermorétractable selon l'une des revendications précédentes, comprenant en outre au moins une couche d'isolation thermique (176) agencée dans la première zone de chauffe (158) et/ou dans la deuxième zone de chauffe (160).

6. Composant thermorétractable selon la revendication 5, dans lequel ladite au moins une couche d'isolation thermique (176) est agencée entre la couche thermorétractable (108) et l'unité de chauffe (120) dans ladite au moins une deuxième zone de chauffe (160) pour réduire la quantité d'énergie transférable dans le composant thermorétractable par rapport à ladite au moins une première zone de chauffe (158).

7. Composant thermorétractable selon la revendication 5 ou 6, dans lequel ladite au moins une couche d'isolation thermique (176) enclôt la couche thermorétractable (108) et l'unité de chauffe (120) dans la première zone de chauffe (158) pour augmenter la quantité d'énergie transférable dans la couche thermorétractable (108) par rapport à la deuxième zone de chauffe (160).

8. Composant thermorétractable selon l'une des revendications précédentes, dans lequel le fil électroconducteur comprend un fil métallique (106) dont la section transversale est ronde, ovale ou polygonale et/ou dans lequel le film électroconducteur comprend un film électroconducteur (116).

9. Composant thermorétractable selon la revendication 10, dans lequel ladite au moins une deuxième zone de chauffe (160) est agencée entre une extrémité périphérique dudit composant thermorétractable et ladite au moins une première zone de chauffe (158), et dans lequel ledit système de chauffe est fonctionnel pour procurer une énergie de chauffe dans la première zone de chauffe (158) durant au moins une période du processus de thermorétraction qui est supérieure à celle procurée dans la deuxième zone de chauffe (160).

10. Composant thermorétractable selon l'une des revendications 1 à 9, dans lequel l'unité de chauffe (120) comprend au moins un fil électroconducteur (106, 116) destiné à être chauffé par un courant électrique qui circule dans le fil (106, 116), et au moins une couche de diffusion de chaleur (124) agencée en contact thermique avec ledit au moins un fil électroconducteur (106) pour distribuer circonférentiellement la chaleur générée par le fil électroconducteur (106).

11. Composant thermorétractable selon l'une des revendications 1 à 10, dans lequel le composant thermorétractable (100) comprend en outre un élément de compression (142), le fil électroconducteur (106) étant agencé entre ledit élément de compression (142) et la couche thermorétractable (108), de telle sorte que l'élément de compression (142) pousse le fil électroconducteur (106) vers la couche thermorétractable (108) durant au moins certaines parties du temps pendant lequel la couche thermorétractable est chauffée.

12. Procédé d'assemblage d'un composant thermorétractable qui présente des premières dimensions (102A, 104A) dans un état expansé et des deuxièmes dimensions (102B, 104B) dans un état rétracté, au moins l'une des premières dimensions (102A) étant supérieure à la deuxième dimension correspondante (102B), et le procédé comprenant les étapes suivantes :
fourniture du composant thermorétractable (100) à l'état expansé, ledit composant thermorétractable (100) comprenant un manchon thermorétractable avec une couche thermorétractable (108), ainsi qu'un système de chauffe pour chauffer un composant thermorétractable durant au moins certaines parties du processus de thermorétraction, le système de chauffe comprenant au moins une première unité de chauffe (120) et au moins une deuxième unité de chauffe (120) à agencer sur une surface du manchon thermorétractable et en contact mécanique et thermique avec au moins une partie dudit manchon thermorétractable, lesdites unités de chauffe (120) permettant de chauffer la couche thermorétractable (108) jusqu'à sa température de thermorétraction,
connexion d'une source d'alimentation électrique à l'unité de chauffe (120),
mise en chauffe de l'unité de chauffe (120) de manière provoquer une rétraction du composant thermorétractable (100) jusqu'auxdites deuxièmes dimensions, dans lequel ledit système de chauffe comporte au moins une première zone de chauffe (158) et au moins une deuxième zone de chauffe (160), dans lequel ladite au moins une première unité de chauffe (120) est agencée dans ladite au moins une première zone de chauffe (158) et ladite au moins une deuxième unité de chauffe (120) est agencée dans ladite au moins une deuxième zone de chauffe (160), et dans lequel ledit système de chauffe est utilisé pour fournir une énergie de chauffe différente dans les première et deuxième zones de chauffe (158, 160) durant au moins une période du processus de thermorétraction,
dans lequel le manchon thermorétractable est conformé essentiellement comme un tube avec un axe longitudinal (110), et dans lequel les première et deuxième unités de chauffe (120) sont agencées pour enclore radialement le composant thermorétractable, les première et deuxième zones de chauffe (158, 160) étant agencées selon ledit axe longitudinal (110).
